# EUROPEAN PATENT APPLICATION

(11) **EP 4 648 524 A1**
(43) Date of publication of application: **12.11.2025**
(21) Application number: 24738681.6
(22) Date of filing: 02.01.2024
(51) Int. Cl.: H04W 72/25, H04W 74/08, H04W 72/04, H04W 24/08, H04L 1/18, H04W 92/18

(54) **METHOD AND DEVICE FOR PERFORMING WIRELESS COMMUNICATION RELATED TO LBT**

(30) Priority: 02.01.2023 KR 20230000220; 23.03.2023 KR 20230038068
(71) Applicant: LG Electronics Inc., Yeongdeungpo-gu Seoul 07336 (KR)
(72) Inventor: PARK, Giwon, Seoul 06772 (KR); LEE, Seungmin, Seoul 06772 (KR); BACK, Seoyoung, Seoul 06772 (KR)
(74) Representative: Plasseraud IP
(86) International application number: PCT/KR2024/000062
(87) International publication number: WO 2024/147610

(57) **Abstract**

Proposed are a method for a first device to perform wireless communication and a device supporting same. For example, the first device may acquire configuration information related to a resource pool. For example, the first device may select resources for MCSt within the resource pool. For example, the first device may perform LBT for the MCSt. For example, the first device may trigger resource selection on the basis of (i) the LBT failing and (ii) SL transmission not being performed within any resources related to the MCSt.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic.

Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

In one embodiment, provided is a method for performing wireless communication by a first device. For example, the first device may obtain configuration information related to a resource pool. For example, the first device may select resources for multi-consecutive slots transmission (MCSt) within the resource pool. For example, the first device may perform a listen-before-talk (LBT) for the MCSt. For example, the first device may trigger a resource selection, (i) based on a failure of the LBT and (ii) based on sidelink (SL) transmission not being performed in any of the resources for the MCSt.

In one embodiment, provided is a first device configured to perform wireless communication. The first device may include at least one transceiver; at least one processor; and at least one memory operably connected to the at least one processor and storing instructions, based on being executed by the at least one processor, cause the first device to perform operations. For example, the operations may include causing the first device (e.g., the processor 102 and the transceiver 106) to perform at least one of the following: obtaining configuration information related to a resource pool; selecting resources for multi-consecutive slots transmission (MCSt) within the resource pool; performing a listen-before-talk (LBT) for the MCSt; and triggering a resource selection, (i) based on a failure of the LBT and (ii) based on sidelink (SL) transmission not being performed in any of the resources for the MCSt.

In one embodiment, provided is a processing device configured to control a first device. The processing device may comprise: at least one processor; at least one memory operably connected to the at least one processor and storing instructions, based on being executed by the at least one processor, cause the first device to perform operations. For example, the operations may include causing the first device (e.g., the processor 102 and the transceiver 106) to perform at least one of the following: obtaining configuration information related to a resource pool; selecting resources for multi-consecutive slots transmission (MCSt) within the resource pool; performing a listen-before-talk (LBT) for the MCSt; and triggering a resource selection, (i) based on a failure of the LBT and (ii) based on sidelink (SL) transmission not being performed in any of the resources for the MCSt.

In one embodiment, provided is a non-transitory computer-readable storage medium recording instructions. For example, the instructions may cause a first device to perform operations. For example, the operations may include causing the first device (e.g., the processor 102 and the transceiver 106) to perform at least one of the following: obtaining configuration information related to a resource pool; selecting resources for multi-consecutive slots transmission (MCSt) within the resource pool; performing a listen-before-talk (LBT) for the MCSt; and triggering a resource selection, (i) based on a failure of the LBT and (ii) based on sidelink (SL) transmission not being performed in any of the resources for the MCSt.

In one embodiment, provided is a method for performing wireless communication by a second device. For example, the second device may obtain configuration information related to a resource pool. For example, the second device may receive, from a first device, at least one physical sidelink control channel (PSCCH) and at least one physical sidelink shared channel (PSSCH) related to at least one PSCCH, based on resources for multi-consecutive slots transmission (MCSt) within the resource pool. For example, the resources for the MCSt may be selected within the resource pool. For example, a listen-before-talk (LBT) may be performed for the MCSt. For example, (i) based on a failure of the LBT and (ii) based on sidelink (SL) transmission not being performed in any of the resources for the MCSt, a resource selection may be triggered.

In one embodiment, provided is a second device configured to perform wireless communication. The second device may include at least one transceiver; at least one processor; and at least one memory operably connected to the at least one processor and storing instructions, based on being executed by the at least one processor, cause the second device to perform operations. For example, the operations may include causing the second device (e.g., the processor 202 and the transceiver 206) to perform at least one of the following: obtaining configuration information related to a resource pool; and receiving, from a first device, at least one physical sidelink control channel (PSCCH) and at least one physical sidelink shared channel (PSSCH) related to at least one PSCCH, based on resources for multi-consecutive slots transmission (MCSt) within the resource pool, wherein the resources for the MCSt may be selected within the resource pool, wherein a listen-before-talk (LBT) may be performed for the MCSt, and wherein, (i) based on a failure of the LBT and (ii) based on sidelink (SL) transmission not being performed in any of the resources for the MCSt, a resource selection may be triggered.

In one embodiment, provided is a processing device configured to control a second device. The processing device may comprise: at least one processor; at least one memory operably connected to the at least one processor and storing instructions, based on being executed by the at least one processor, cause the second device to perform operations. For example, the operations may include causing the second device (e.g., the processor 202 and the transceiver 206) to perform at least one of the following: obtaining configuration information related to a resource pool; and receiving, from a first device, at least one physical sidelink control channel (PSCCH) and at least one physical sidelink shared channel (PSSCH) related to at least one PSCCH, based on resources for multi-consecutive slots transmission (MCSt) within the resource pool, wherein the resources for the MCSt may be selected within the resource pool, wherein a listen-before-talk (LBT) may be performed for the MCSt, and wherein, (i) based on a failure of the LBT and (ii) based on sidelink (SL) transmission not being performed in any of the resources for the MCSt, a resource selection may be triggered.

In one embodiment, provided is a non-transitory computer-readable storage medium recording instructions. For example, the instructions may cause a second device to perform operations. For example, the operations may include causing the second device (e.g., the processor 202 and the transceiver 206) to perform at least one of the following: obtaining configuration information related to a resource pool; and receiving, from a first device, at least one physical sidelink control channel (PSCCH) and at least one physical sidelink shared channel (PSSCH) related to at least one PSCCH, based on resources for multi-consecutive slots transmission (MCSt) within the resource pool, wherein the resources for the MCSt may be selected within the resource pool, wherein a listen-before-talk (LBT) may be performed for the MCSt, and wherein, (i) based on a failure of the LBT and (ii) based on sidelink (SL) transmission not being performed in any of the resources for the MCSt, a resource selection may be triggered.

### BRIEF DESCRIPTION OF THE DRAWINGS

FIG. 1 shows a communication structure that can be provided in the 6G system, based on an embodiment of the present disclosure.
FIG. 2 shows an electromagnetic spectrum, based on an embodiment of the present disclosure.
FIG. 3 shows a structure of an NR system, based on an embodiment of the present disclosure.
FIG. 4 shows a radio protocol architecture, based on an embodiment of the present disclosure.
FIG. 5 shows a structure of a radio frame of an NR, based on an embodiment of the present disclosure.
FIG. 6 shows a structure of a slot of an NR frame, based on an embodiment of the present disclosure.
FIG. 7 shows an example of a BWP, based on an embodiment of the present disclosure.
FIG. 8 shows a procedure of performing V2X or SL communication by a UE based on a transmission mode, based on an embodiment of the present disclosure.
FIG. 9 shows three cast types, based on an embodiment of the present disclosure.
FIG. 10 shows an example of a wireless communication system supporting an unlicensed band, based on an embodiment of the present disclosure.
FIG. 11 shows a method of occupying resources in an unlicensed band, based on an embodiment of the present disclosure.
FIG. 12 shows a case in which plurality of LBT-SBs are included in an unlicensed band, based on an embodiment of the present disclosure.
FIG. 13 shows CAP operations performed by a base station to transmit a downlink signal through an unlicensed band, based on an embodiment of the present disclosure.
FIG. 14 shows type 1 CAP operations performed by a UE to transmit an uplink signal, based on an embodiment of the present disclosure.
FIG. 15 shows a channel access procedure, based on an embodiment of the present disclosure.
FIG. 16 shows an example of N transmission resources for multi-consecutive slots transmission (MCSt), based on an embodiment of the present disclosure.
FIG. 17 is a drawing representing a method of performing wireless communication related to listen-before-talk (LBT), based on an embodiment of the present disclosure.
FIG. 18 is a drawing representing a method of performing wireless communication related to listen-before-talk (LBT), based on an embodiment of the present disclosure.
FIG. 19 is a drawing representing a procedure for performing wireless communication related to listen-before-talk (LBT), based on an embodiment of the present disclosure.
FIG. 20 shows a method for performing wireless communication by a first device, based on an embodiment of the present disclosure.
FIG. 21 shows a method for performing wireless communication by a second device, based on an embodiment of the present disclosure.
FIG. 22 shows a communication system 1, based on an embodiment of the present disclosure.
FIG. 23 shows wireless devices, based on an embodiment of the present disclosure.
FIG. 24 shows a signal process circuit for a transmission signal, based on an embodiment of the present disclosure.
FIG. 25 shows another example of a wireless device, based on an embodiment of the present disclosure.
FIG. 26 shows a hand-held device, based on an embodiment of the present disclosure.
FIG. 27 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G systems can have key elements such as enhanced mobile broadband (eMBB), ultra-reliable low latency communications (URLLC), massive machine-to-machine communications (mMTC), Al-integrated communications, tactile internet, high throughput, high network capacity, high energy efficiency, low backhaul and access network congestion, and enhanced data security.

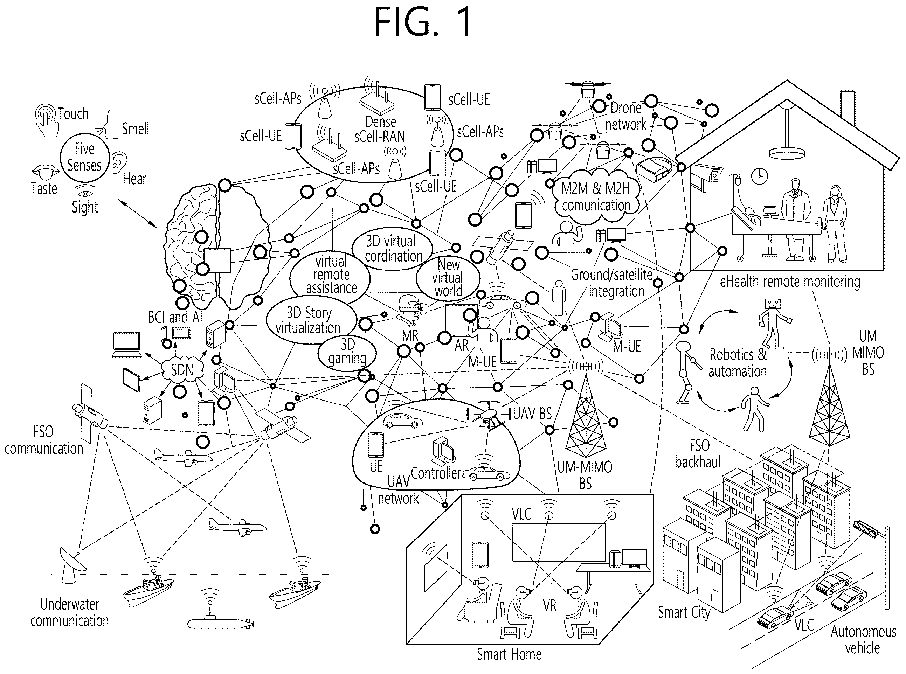

FIG. 1 shows a communication structure that can be provided in the 6G system, based on an embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications, providing end-to-end delay of less than 1 ms. 6G systems will have much better volumetric spectral efficiency as opposed to the more commonly used area spectral efficiency. 6G systems will be able to offer very long battery life and advanced battery technologies for energy harvesting, so mobile devices will not need to be charged separately in a 6G system. New network characteristics in 6G may include the following.
- Satellites integrated network: In order to provide a global mobile population, 6G is expected to be integrated with satellites. The integration of terrestrial, satellite, and airborne networks into a single wireless communication system is critical to 6G.
- Connected intelligence: Unlike previous generations of wireless communication systems, 6G is revolutionary and will update the wireless evolution from "connected things" to "connected intelligence". AI can be applied at each step of the communication process (or each step of signal processing, as we will see later).
- Seamless integration wireless information and energy transfer: 6G wireless networks will transfer power to charge the batteries of devices such as smartphones and sensors. Therefore, wireless information and energy transfer (WIET) will be integrated.
- Ubiquitous super 3D connectivity: Access to networks and core network functions from drones and very low Earth orbit satellites will make super 3D connectivity ubiquitous in 6G.

From the above new network characteristics of 6G, some common requirements may include.
- Small cell networks: The idea of small cell networks was introduced in cellular systems to improve the received signal quality as a result of improved throughput, energy efficiency, and spectral efficiency. As a result, small cell networks are an essential characteristic for 5G and beyond 5G (5GB) communication systems. Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connectivity is characterized by high-capacity backhaul networks to support large volumes of traffic. High-speed fiber optics and free-space optics (FSO) systems can be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwarization and virtualization are two important features that are fundamental to the design process in a 5GB network to ensure flexibility, reconfigurability, and programmability. In addition, billions of devices may be shared on a shared physical infrastructure.

The following describes the key enabling technologies for 6G systems.
- Artificial Intelligence: The most important and new technology to be introduced in the 6G system is AI. The 4G system did not involve AI. 5G systems will support partial or very limited AI. However, 6G systems will be AI-enabled for full automation. Advances in machine learning will create more intelligent networks for real-time communication in 6G. The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF.

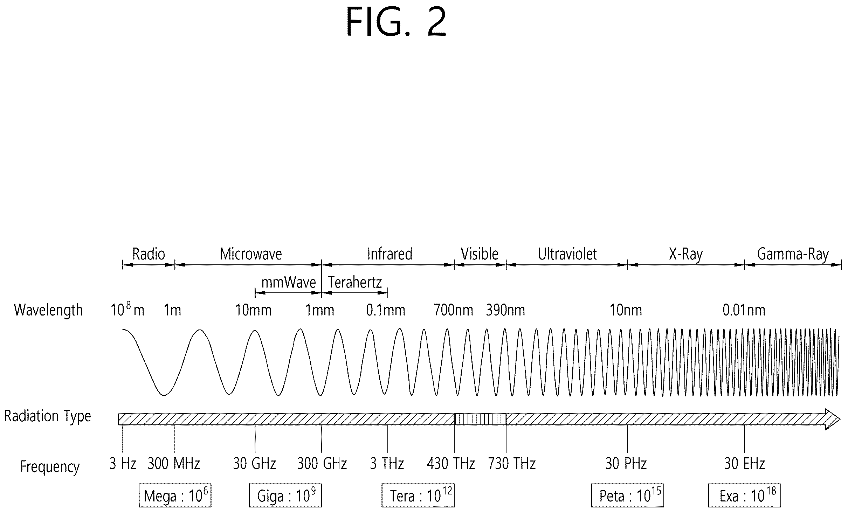

FIG. 2 illustrates an electromagnetic spectrum, according to one embodiment of the present disclosure. The embodiment of FIG. 2 may be combined with various embodiments of the present disclosure.

Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO Technology (Large-scale MIMO)
- Hologram Beamforming (HBF, Hologram Bmeaforming)
- Optical wireless technology
- Free-space optical transmission backhaul network (FSO Backhaul Network)
- Non-Terrestrial Networks (NTN)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface (Reconfigurable Intelligent Surface)
- Metaverse
- Block-chain
- Unmanned aerial vehicles (UAVs): Unmanned aerial vehicles (UAVs) or drones will be an important component of 6G wireless communications. In most cases, high-speed data wireless connectivity will be provided using UAV technology. BS entities are installed on UAVs to provide cellular connectivity. UAVs have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving (Autonomous Driving, Self-driving): For complete autonomous driving, vehicle-to-vehicle communication is required to inform each other of dangerous situations, and vehicle-to-vehicle communication with infrastructure such as parking lots and traffic lights is required to check information such as the location of parking information and signal change times. Vehicle to Everything (V2X), a key element in building an autonomous driving infrastructure, is a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving will go beyond delivering warnings or guidance messages to the driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For clarity of description, 5G NR is mainly described, but the technical idea according to an embodiment of the present disclosure is not limited thereto. Various embodiments of the present disclosure may also be applied to a 6G communication system.

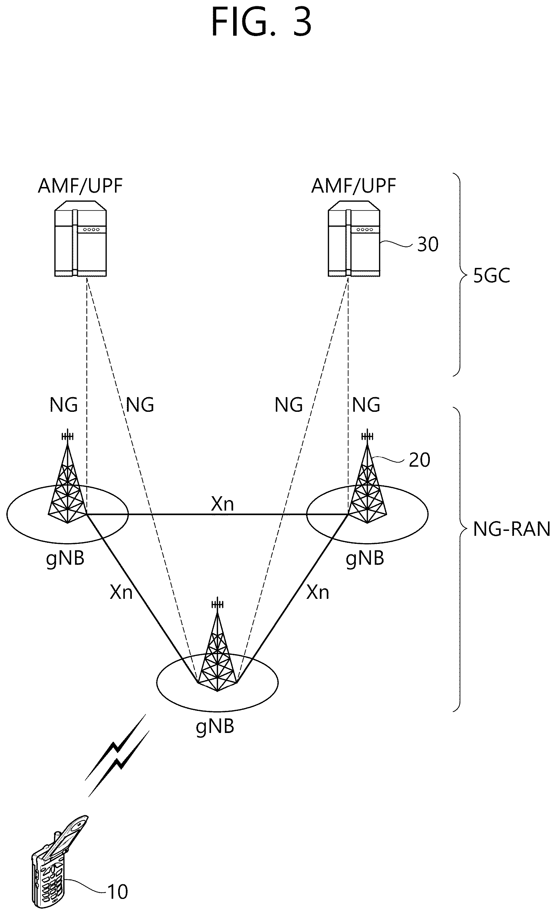

FIG. 3 shows a structure of an NR system, based on an embodiment of the present disclosure. The embodiment of FIG. 3 may be combined with various embodiments of the present disclosure.

Referring to FIG. 3, a next generation-radio access network (NG-RAN) may include a BS 20 providing a UE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 3 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

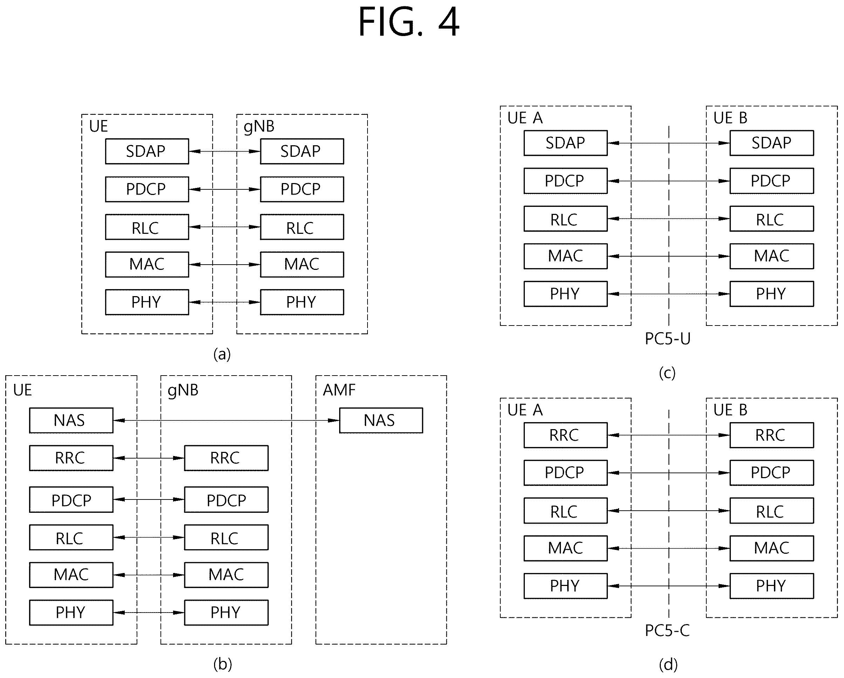

FIG. 4 shows a radio protocol architecture, based on an embodiment of the present disclosure. The embodiment of FIG. 4 may be combined with various embodiments of the present disclosure. Specifically, (a) of FIG. 4 shows a radio protocol stack of a user plane for Uu communication, and (b) of FIG. 4 shows a radio protocol stack of a control plane for Uu communication. (c) of FIG. 4 shows a radio protocol stack of a user plane for SL communication, and (d) of FIG. 4 shows a radio protocol stack of a control plane for SL communication.

Referring to FIG. 4, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC _CONNECTED state, and, otherwise, the UE may be in an RRC_IDLE state. In case of the NR, an RRC_INACTIVE state is additionally defined, and a UE being in the RRC _INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

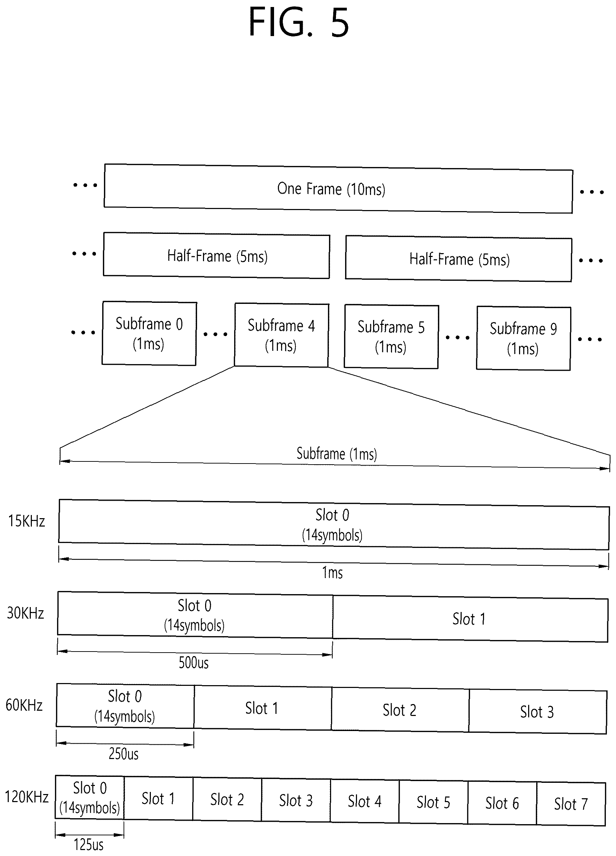

FIG. 5 shows a structure of a radio frame of an NR, based on an embodiment of the present disclosure. The embodiment of FIG. 5 may be combined with various embodiments of the present disclosure.

Referring to FIG. 5, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 2 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP or extened CP is used.

**[Table 2]**

| CP type | SCS (15*2^{u}) | N^{slot}_{symb} | N^{frame,u}ₛₗₒₜ | N^{subframe,u} ₛₗₒₜ |
|---|---|---|---|---|
| normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| extended CP | 60kHz (u=2) | 12 | 40 | 4 |

In an NR system, OFDM(A) numerologies (e.g., SCS, CP length, and so on) between multiple cells being integrate to one UE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

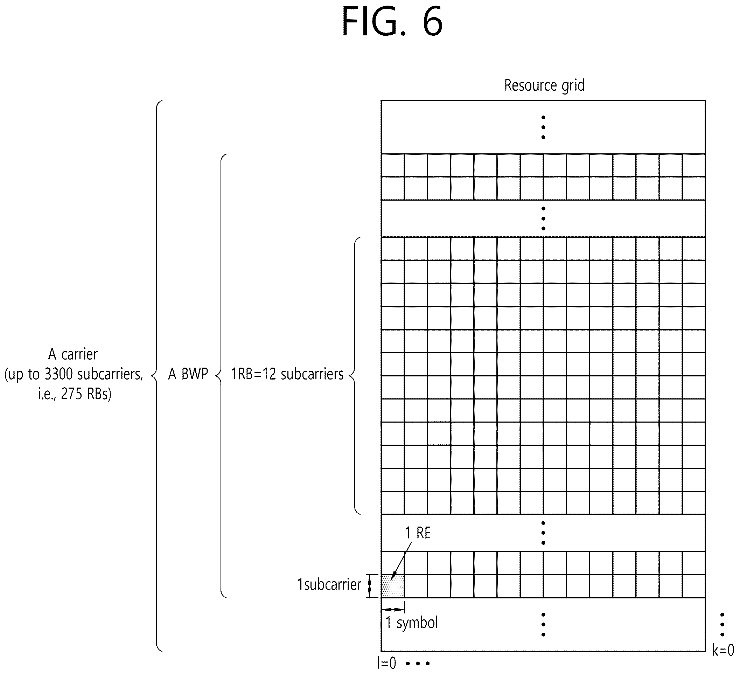

FIG. 6 shows a structure of a slot of an NR frame, based on an embodiment of the present disclosure. The embodiment of FIG. 6 may be combined with various embodiments of the present disclosure.

Referring to FIG. 6, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the UE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the UE may not trigger a channel state information (CSI) report for the inactive DL BWP. For example, the UE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the UE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting UE may transmit a SL channel or a SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the UE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC _CONNECTED mode, at least one SL BWP may be activated in the carrier.

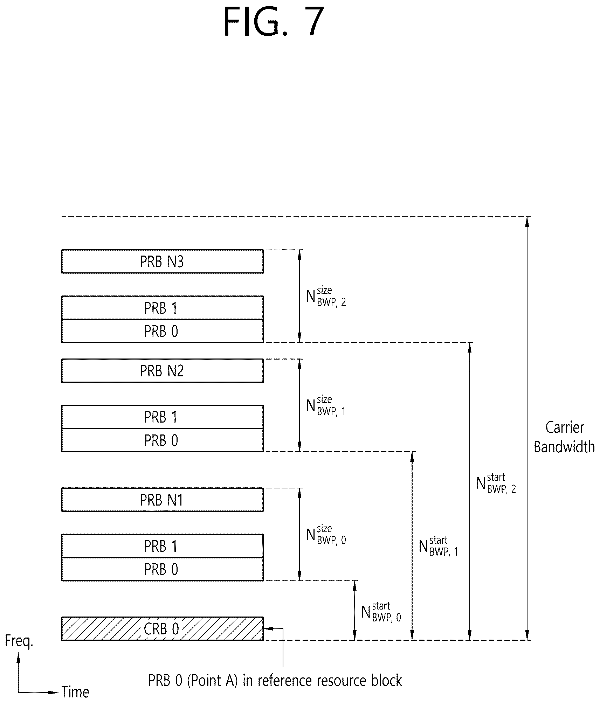

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as a SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

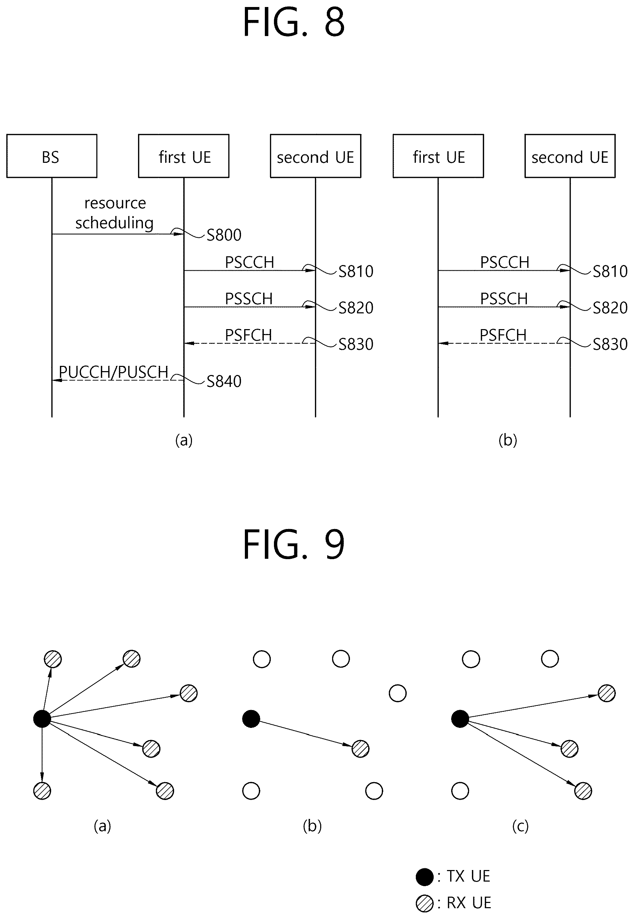

FIG. 8 shows a procedure of performing V2X or SL communication by a UE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a UE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a UE operation related to an NR resource allocation mode 2.

Referring to (a) of FIG. 8, in the LTE transmission mode 1, the LTE transmission mode 3, or the NR resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be a DCI for SL scheduling. For example, a format of the DCI may be a DCI format 3_0 or a DCI format 3 1.

Hereinafter, an example of DCI format 3_0 will be described.

DCI format 3_0 is used for scheduling of NR PSCCH and NR PSSCH in one cell.

The following information is transmitted by means of the DCI format 3_0 with CRC scrambled by SL-RNTI or SL-CS-RNTI:
- Resource pool index - ceiling (log₂ I) bits, where I is the number of resource pools for transmission configured by the higher layer parameter sl-TxPoolScheduling.
- Time gap - 3 bits determined by higher layer parameter sl-DCI-ToSL-Trans
- HARQ process number - 4 bits
- New data indicator - 1 bit
- Lowest index of the subchannel allocation to the initial transmission - ceiling (log₂(N^{SL}_{subChannel})) bits
- SCI format 1-A fields: frequency resource assignment, time resource assignment
- PSFCH-to-HARQ feedback timing indicator - ceiling (log₂ N_{fb_timing}) bits, where N_{fb_timing} is the number of entries in the higher layer parameter sl-PSFCH-ToPUCCH.
- PUCCH resource indicator - 3 bits
- Configuration index - 0 bit if the UE is not configured to monitor DCI format 3_0 with CRC scrambled by SL-CS-RNTI; otherwise 3 bits. If the UE is configured to monitor DCI format 3_0 with CRC scrambled by SL-CS-RNTI, this field is reserved for DCI format 3_0 with CRC scrambled by SL-RNTI.
- Counter sidelink assignment index - 2 bits, 2 bits if the UE is configured with pdsch-HARQ-ACK-Codebook = dynamic, 2 bits if the UE is configured with pdsch-HARQ-ACK-Codebook = semi-static
- Padding bits, if required

Referring to (b) of FIG. 8, in the LTE transmission mode 2, the LTE transmission mode 4, or the NR resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format. For example, the 1^{st}-stage SCI format may include a SCI format 1-A, and the 2^{nd}-stage SCI format may include a SCI format 2-A and/or a SCI format 2-B.

Hereinafter, an example of SCI format 1-A will be described.

SCI format 1-A is used for the scheduling of PSSCH and 2^{nd}-stage-SCI on PSSCH.

The following information is transmitted by means of the SCI format 1-A:
- Priority - 3 bits
- Frequency resource assignment - ceiling (log₂(N^{SL}_{subChannel}(N^{SL}_{subChannel}+1)/2)) bits when the value of the higher layer parameter sl-MaxNumPerReserve is configured to 2; otherwise ceiling log₂(N^{SL}_{subChannel}(N^{SL}_{subChannel}+1)(2N^{SL}_{subChannel}+1)/6) bits when the value of the higher layer parameter sl-MaxNumPerReserve is configured to 3
- Time resource assignment - 5 bits when the value of the higher layer parameter sl-MaxNumPerReserve is configured to 2; otherwise 9 bits when the value of the higher layer parameter sl-MaxNumPerReserve is configured to 3
- Resource reservation period - ceiling (log₂ N_{rsv_period}) bits, where N_{rsv_period} is the number of entries in the higher layer parameter sl-ResourceReservePeriodList, if higher layer parameter sl-MultiReserveResource is configured; 0 bit otherwise
- DMRS pattern - ceiling (log₂ Nₚₐₜₜₑᵣₙ) bits, where Nₚₐₜₜₑᵣₙ is the number of DMRS patterns configured by higher layer parameter sl-PSSCH-DMRS-TimePatternList
- 2^{nd}-stage SCI format - 2 bits as defined in Table 5
- Beta_offset indicator - 2 bits as provided by higher layer parameter sl-BetaOffsets2ndSCI
- Number of DMRS port - 1 bit as defined in Table 6
- Modulation and coding scheme - 5 bits
- Additional MCS table indicator - 1 bit if one MCS table is configured by higher layer parameter sl-Additional-MCS-Table; 2 bits if two MCS tables are configured by higher layer parameter sl- Additional-MCS-Table; 0 bit otherwise
- PSFCH overhead indication - 1 bit if higher layer parameter sl-PSFCH-Period = 2 or 4; 0 bit otherwise
- Reserved - a number of bits as determined by higher layer parameter sl-NumReservedBits, with value set to zero.

**[Table 5]**

| Value of 2nd-stage SCI format field | 2nd-stage SCI format |
|---|---|
| 00 | SCI format 2-A |
| 01 | SCI format 2-B |
| 10 | Reserved |
| 11 | Reserved |

**[Table 6]**

| Value of the Number of DMRS port field | Antenna ports |
|---|---|
| 0 | 1000 |
| 1 | 1000 and 1001 |

Hereinafter, an example of SCI format 2-A will be described.

SCI format 2-A is used for the decoding of PSSCH, with HARQ operation when HARQ-ACK information includes ACK or NACK, when HARQ-ACK information includes only NACK, or when there is no feedback of HARQ-ACK information.

The following information is transmitted by means of the SCI format 2-A:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Cast type indicator - 2 bits as defined in Table 7
- CSI request - 1 bit

**[Table 7]**

| Value of Cast type indicator | Cast type |
|---|---|
| 00 | Broadcast |
| 01 | Groupcast when HARQ-ACK information includes ACK or NACK |
| 10 | Unicast |
| 11 | Groupcast when HARQ-ACK information includes only NACK |

Hereinafter, an example of SCI format 2-B will be described.

SCI format 2-B is used for the decoding of PSSCH, with HARQ operation when HARQ-ACK information includes only NACK, or when there is no feedback of HARQ-ACK information.

The following information is transmitted by means of the SCI format 2-B:
- HARQ process number - 4 bits
- New data indicator - 1 bit
- Redundancy version - 2 bits
- Source ID - 8 bits
- Destination ID - 16 bits
- HARQ feedback enabled/disabled indicator - 1 bit
- Zone ID - 12 bits
- Communication range requirement - 4 bits determined by higher layer parameter sl-ZoneConfigMCR-Index

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another UE. In case of the groupcast-type SL transmission, the UE may perform SL communication with respect to one or more UEs in a group to which the UE belongs. In various embodiments of the present disclosure, SL groupcast communication may be replaced with SL multicast communication, SL one-to-many communication, or the like.

Hereinafter, a hybrid automatic repeat request (HARQ) procedure will be described.

For example, the SL HARQ feedback may be enabled for unicast. In this case, in a non-code block group (non-CBG) operation, if the receiving UE decodes a PSCCH of which a target is the receiving UE and if the receiving UE successfully decodes a transport block related to the PSCCH, the receiving UE may generate HARQ-ACK. In addition, the receiving UE may transmit the HARQ-ACK to the transmitting UE. Otherwise, if the receiving UE cannot successfully decode the transport block after decoding the PSCCH of which the target is the receiving UE, the receiving UE may generate the HARQ-NACK. In addition, the receiving UE may transmit HARQ-NACK to the transmitting UE.

For example, the SL HARQ feedback may be enabled for groupcast. For example, in the non-CBG operation, two HARQ feedback options may be supported for groupcast.
(1) Groupcast option 1: After the receiving UE decodes the PSCCH of which the target is the receiving UE, if the receiving UE fails in decoding of a transport block related to the PSCCH, the receiving UE may transmit HARQ-NACK to the transmitting UE through a PSFCH. Otherwise, if the receiving UE decodes the PSCCH of which the target is the receiving UE and if the receiving UE successfully decodes the transport block related to the PSCCH, the receiving UE may not transmit the HARQ-ACK to the transmitting UE.
(2) Groupcast option 2: After the receiving UE decodes the PSCCH of which the target is the receiving UE, if the receiving UE fails in decoding of the transport block related to the PSCCH, the receiving UE may transmit HARQ-NACK to the transmitting UE through the PSFCH. In addition, if the receiving UE decodes the PSCCH of which the target is the receiving UE and if the receiving UE successfully decodes the transport block related to the PSCCH, the receiving UE may transmit the HARQ-ACK to the transmitting UE through the PSFCH.

For example, if the groupcast option 1 is used in the SL HARQ feedback, all UEs performing groupcast communication may share a PSFCH resource. For example, UEs belonging to the same group may transmit HARQ feedback by using the same PSFCH resource.

For example, if the groupcast option 2 is used in the SL HARQ feedback, each UE performing groupcast communication may use a different PSFCH resource for HARQ feedback transmission. For example, UEs belonging to the same group may transmit HARQ feedback by using different PSFCH resources.

In the present disclosure, HARQ-ACK may be referred to as ACK, ACK information, or positive-ACK information, and HARQ-NACK may be referred to as NACK, NACK information, or negative-ACK information.

Hereinafter, a UE procedure for reporting HARQ-ACK in the sidelink will be described.

A UE can be indicated by an SCI format scheduling a PSSCH reception, in one or more sub-channels from a number of N^{PSSCH}_{subch} sub-channels, to transmit a PSFCH with HARQ-ACK information in response to the PSSCH reception. The UE provides HARQ-ACK information that includes ACK or NACK, or only NACK.

A UE can be provided, by sl-PSFCH-Period-r16, a number of slots in a resource pool for a period of PSFCH transmission occasion resources. If the number is zero, PSFCH transmissions from the UE in the resource pool are disabled. A UE expects that a slot t'ₖ^{SL} (0 ≤ k < T'ₘₐₓ) has a PSFCH transmission occasion resource if k mod N^{PSFCH}_{PSSCH} = 0, where t'ₖ^{SL} is a slot that belongs to the resource pool, T'ₘₐₓ is a number of slots that belong to the resource pool within 10240 msec, and N^{PSFCH}_{PSSCH} is provided by sl-PSFCH-Period-r16. A UE may be indicated by higher layers to not transmit a PSFCH in response to a PSSCH reception.If a UE receives a PSSCH in a resource pool and the HARQ feedback enabled/disabled indicator field in an associated SCI format 2-A or a SCI format 2-B has value 1, the UE provides the HARQ-ACK information in a PSFCH transmission in the resource pool. The UE transmits the PSFCH in a first slot that includes PSFCH resources and is at least a number of slots, provided by sl-MinTimeGapPSFCH-r16, of the resource pool after a last slot of the PSSCH reception.

A UE is provided by sl-PSFCH-RB-Set-r16 a set of M^{PSFCH}_{PRB,set} PRBs in a resource pool for PSFCH transmission in a PRB of the resource pool. For a number of N_{subch} sub-channels for the resource pool, provided by sl-NumSubchannel, and a number of PSSCH slots associated with a PSFCH slot that is less than or equal to N^{PSFCH}_{PSSCH}, the UE allocates the [(i+j · N^{PSFCH}_{PSSCH}) · M^{PSFCH}_{subch,slot}, (i+1+j · N^{PSFCH}_{PSSCH}) · M^{PSFCH}_{subch},ₛₗₒₜ-1] PRBs from the M_{PRB,set}^{PSFCH} PRBs to slot i among the PSSCH slots associated with the PSFCH slot and sub-channel j, where M^{PSFCH}_{subch,slot} = M^{PSFCH}_{PRB,set}/(N_{subch}·N^{PSFCH}_{PSSCH}), 0 ≤ i < N^{PSFCH}_{PSSCH}, 0 ≤ j < N_{subch}, and the allocation starts in an ascending order of i and continues in an ascending order of j. The UE expects that M^{PSFCH}_{PRB,set} is a multiple of N_{subch}·N^{PSFCH}_{PSSCH}.

A UE determines a number of PSFCH resources available for multiplexing HARQ-ACK information in a PSFCH transmission as R^{PSFCH}_{PRB,CS} = N^{PSFCH}_{type}·M^{PSFCH}_{subch,slot} ·N^{PSFCH}_{CS} where N^{PSFCH}_{CS} is a number of cyclic shift pairs for the resource pool and, based on an indication by higher layers,
- N^{PSFCH}_{type} = 1 and the M^{PSFCH}_{subch,slot} PRBs are associated with the starting sub-channel of the corresponding PSSCH
- N^{PSFCH}_{type} = N^{PSSCH}_{subch} and the N^{PSSCH}_{subch}·M^{PSFCH}_{subch,slot} PRBs are associated with one or more sub-channels from the N^{PSSCH}_{subch} sub-channels of the corresponding PSSCH

The PSFCH resources are first indexed according to an ascending order of the PRB index, from the N^{PSFCH}_{type}·M^{PSFCH}_{subch,slot} PRBs, and then according to an ascending order of the cyclic shift pair index from the N^{PSFCH}_{CS} cyclic shift pairs.

A UE determines an index of a PSFCH resource for a PSFCH transmission in response to a PSSCH reception as (P_{ID} + M_{ID}) mod R^{PSFCH}_{PRB,CS} where P_{ID} is a physical layer source ID provided by SCI format 2-A or 2-B scheduling the PSSCH reception, and M_{ID} is the identity of the UE receiving the PSSCH as indicated by higher layers if the UE detects a SCI format 2-A with Cast type indicator field value of "01"; otherwise, M_{ID} is zero.

A UE determines a m₀ value, for computing a value of cyclic shift α, from a cyclic shift pair index corresponding to a PSFCH resource index and from N^{PSFCH}_{CS} using Table 8.

**[Table 8]**

| N^{PSFCH}_{CS} | m₀ | | | | | |
|---|---|---|---|---|---|---|
| | cyclic shift pair index 0 | cyclic shift pair index 1 | cyclic shift pair index 2 | cyclic shift pair index 3 | cyclic shift pair index 4 | cyclic shift pair index 5 |
| 1 | 0 | - | - | - | - | - |
| 2 | 0 | 3 | - | - | - | - |
| 3 | 0 | 2 | 4 | - | - | - |
| 6 | 0 | 1 | 2 | 3 | 4 | 5 |

A UE determines a mcs value, for computing a value of cyclic shift α, as in Table 9 if the UE detects a SCI format 2-A with Cast type indicator field value of "01" or "10", or as in Table 10 if the UE detects a SCI format 2-B or a SCI format 2-A with Cast type indicator field value of "11". The UE applies one cyclic shift from a cyclic shift pair to a sequence used for the PSFCH transmission.

**[Table 9]**

| HARQ-ACK Value | 0 (NACK) | 1 (ACK) |
|---|---|---|
| Sequence cyclic shift | 0 | 6 |

**[Table 10]**

| HARQ-ACK Value | 0 (NACK) | 1 (ACK) |
|---|---|---|
| Sequence cyclic shift | 0 | N/A |

The SL DRX configuration mentioned in the present disclosure may include at least one or more of the following parameters.

For example, the SL DRX configuration may include one or more of the information listed below.
(1) For example, the SL drx-onDurationTimer may be information on the duration at the beginning of a DRX cycle. For example, the duration at the beginning of a DRX cycle may be information on a period during which the UE operates in an active mode to transmit or receive sidelink data.
(2) For example, the SL drx-SlotOffset may be information on the delay before starting the drx-onDurationTimer.
(3) For example, the SL drx-InactivityTimer may be information on the duration after the PSCCH occasion in which a PSCCH indicates a new sidelink transmission and reception for the MAC entity. For example, when the transmission UE indicates a PSSCH transmission through the PSCCH, the transmission UE may operate in an active mode during the SL drx-InactivityTimer, so that the transmission UE may transmit the PSSCH to the reception UE. Also, for example, when the reception UE is indicated through the PSCCH reception that the transmission UE will transmit the PSSCH, the reception UE may operate in an active mode during the SL drx-InactivityTimer, so that the reception UE may receive the PSSCH from the transmission UE.
(4) For example, the SL drx-RetransmissionTimer may be information on the maximum duration until a retransmission is received. For example, the SL drx-RetransmissionTimer may be configured per HARQ process. For example, the SL drx-RetransmissionTimer may be configured per sidelink process.
(5) For example, the SL drx-HARQ-RTT-Timer may be information on the minimum duration before an assignment for HARQ retransmission is expected by the MAC entity. For example, the SL drx-HARQ-RTT-Timer may be configured per HARQ process. For example, the SL drx-HARQ-RTT-Timer may be configured per sidelink process.
(6) For example, the SL drx-LongCycleStartOffset may be information on the Long DRX cycle and drx-StartOffset which defines the subframe where the Long and Short DRX cycle starts.
(7) For example, the SL drx-ShortCycle may be information on the Short DRX cycle. For example, the SL drx-ShortCycle may be optional information.
(8) For example, the SL drx-ShortCycleTimer may be information on the duration the UE shall follow the Short DRX cycle. For example, the SL drx-ShortCycleTimer may be optional information.
(9) For example, the SL drx-StartOffset may be information on the subframe where the SL DRX cycle starts.
(10) For example, the SL drx-Cycle may be information on the SL DRX cycle.

The SL DRX timer described in the present disclosure may be used for the following purposes.
(1) SL DRX onduration timer: the duration in which the UE performing the SL DRX operation should basically operate in an active time in order to receive a PSCCH/PSSCH from other UE(s)
(2) SL DRX inactivity timer: the duration extending the SL DRX onduration duration, which is the duration in which the UE performing the SL DRX operation should basically operate in the active time in order to receive the PSCCH/PSSCH from other UE(s)

For example, the UE may extend the SL DRX onduration timer by the SL DRX inactivity timer duration. In addition, if the UE receives a new packet (e.g., new PSSCH transmission) from other UE(s), the UE may extend the SL DRX onduration timer by starting the SL DRX inactivity timer.

For example, the SL DRX inactivity timer may be used for extending the SL DRX onduration duration, which is the duration in which the RX UE performing the SL DRX operation should basically operate in the active time in order to receive the PSCCH/PSSCH from other UE(s). That is, the SL DRX onduration timer may be extended by the SL DRX inactivity timer period. In addition, if the RX UE receives a new packet (e.g., new PSSCH transmission) from other TX UE(s), the RX UE may extend the SL DRX onduration timer by starting the SL DRX inactivity timer.

(3) SL DRX HARQ RTT timer: the duration in which the UE performing the SL DRX operation operates in a sleep mode until receiving a retransmission packet (or PSSCH assignment) transmitted by other UE(s)

For example, if the UE starts the SL DRX HARQ RTT timer, the UE may determine that other UE(s) will not transmit a sidelink retransmission packet to the UE until the SL DRX HARQ RTT timer expires, and the UE may operate in a sleep mode while the corresponding timer is running. For example, if the UE starts the SL DRX HARQ RTT timer, the UE may not monitor a sidelink retransmission packet from other UE(s) until the SL DRX HARQ RTT timer expires. For example, if the RX UE which has received a PSCCH/PSSCH transmitted by the TX UE transmits SL HARQ NACK feedback, the RX UE may start the SL DRX HARQ RTT timer. In this case, the RX UE may determine that other TX UE(s) will not transmit a sidelink retransmission packet to the RX UE until the SL DRX HARQ RTT timer expires, and the RX UE may operate in a sleep mode while the corresponding timer is running.

(4) SL DRX retransmission timer: the timer which starts when the SL DRX HARQ RTT timer expires, and the duration in which the UE performing the SL DRX operation operates in an active time in order to receive a retransmission packet (or PSSCH assignment) transmitted by other UE(s)

For example, for the corresponding timer duration, the UE may receive or monitor a retransmission sidelink packet (or PSSCH assignment) transmitted by other UE(s). For example, the RX UE may receive or monitor a retransmission sidelink packet (or PSSCH assignment) transmitted by other TX UE(s) while the SL DRX retransmission timer is running.

The Uu DRX timer mentioned in the present disclosure may be used for the following purposes.

### (1) Uu DRX HARQ RTT TimerSL

For example, Uu DRX HARQ RTT TimerSL may be used for a period during which a UE performing Uu DRX operation does not need to monitor DCI (PDCCH) for SL Mode 1 operation transmitted by a base station. That is, while Uu DRX HARQ RTT TimerSL is operating, the UE may not need to monitor PDCCH for SL Mode 1 operation. In other words, Uu DRX HARQ RTT TimerSL may mean a minimum duration before an SL retransmission grant is expected.

### (2) Uu DRX Retransmission TimerSL

For example, it may be used in a period where a UE performing Uu DRX operation monitors DCI (PDCCH) for SL Mode 1 operation transmitted by a base station. That is, while Uu DRX Retransmission TimerSL is operating, the UE may monitor PDCCH transmitted by a base station for SL Mode 1 operation. In other words, Uu DRX Retransmission TimerSL may mean a maximum duration until an SL retransmission grant is received.

In the present disclosure, the names of the timer (drx-HARQ-RTT-Timer-SL, drx-RetransmissionTimer-SL, Sidelink DRX Onduration Timer, Sidelink DRX Inactivity Timer, Sidelink DRX HARQ RTT Timer, Sidelink DRX Retransmission Timer, etc.) is exemplary, and a timer performing the same/similar function based on the contents described in each timer may be considered as the same/similar timer regardless of the names of the timer.

Meanwhile, according to one embodiment of the present disclosure, a communication method between a terminal and a base station in an unlicensed band may be supported in NR-Unlicensed.

In addition, a mechanism that can support terminal-to-terminal communication in an unlicensed band between sidelink terminals may be supported in Rel-18.

According to one embodiment of the present disclosure regarding NR-U, for example, Channel/Channel occupancy/Channel occupany time/LBT (CAP, channel access procedure) types may be as follows.
- Channel: A set of frequency-axis resources that perform LBT. For example, in NR-U, it may mean 20 MHz LBT bandwidth, and for example, may have the same meaning as RB set.
- Channel occupancy (CO): It may mean time/frequency-axis resources obtained by a base station or terminal after LBT success.
- Channel occupancy time (COT): It may mean time-axis resources obtained by a base station or terminal after LBT success. Sharing between base stations (or terminals) that have obtained CO and terminals (or base stations) is possible, and this may be called COT sharing. Depending on the initiating device, it may also be called gNB-initiated COT or UE-initiated COT.
- LBT types (or channel access procedures) for DL/UL transmission
- Type 1 (e.g., also called Cat-4 LBT): Random back-off based channel access procedure
- Cat-4: the contention window may change
- Type 2: Can be performed in case of COT sharing within COT acquired by gNB or UE
- Type 2A (e.g., also called Cat-2 LBT (one shot LBT) or one-shot LBT): 25 usec one-shot LBT
- TX starts immediately after idle sensing for at least 25 usec gap
- Can be used to initiate SSB and non-unicast DL information transmission
- Type 2B (16 usec one-shot LBT)
- TX starts immediately after idle sensing for a 16 us gap
- Type 2C (e.g., also called Cat-1 LBT (non-LBT) or No LBT)
- TX starts immediately after up to 16us gap and does not sense the channel before the transmission
- Duration of the transmission is at most 584 us

Meanwhile, NR-unlicensed spectrum supports a communication method between a terminal and a base station in an unlicensed band. Additionally, a mechanism to support communication between sidelink terminals in unlicensed bands is expected to be supported in Rel-18.

In this disclosure, a channel may refer to a set of frequency-axis resources that perform Listen-Before-Talk (LBT). In NR-U, a channel may mean a 20 MHz LBT bandwidth and may have the same meaning as an RB set. For example, an RB set may be defined in section 7 of 3GPP TS 38.214 V17.0.0.

In the present disclosure, channel occupancy (CO) may refer to time/frequency domain resources obtained by the base station or the UE after LBT success.

In the present disclosure, channel occupancy time (COT) may refer to time domain resources obtained by the base station or the UE after LBT success. It may be shared between the base station (or the UE) and the UE (or the base station) that obtained the CO, and this may be referred to as COT sharing. Depending on the initiating device, this may be referred to as gNB-initiated COT or UE-initiated COT.

Hereinafter, a wireless communication system supporting an unlicensed band/shared spectrum will be described.

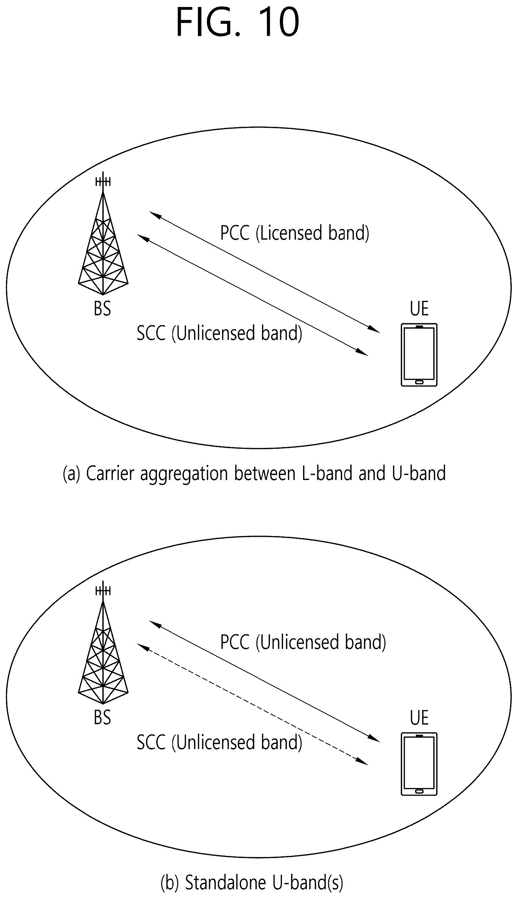

FIG. 10 shows an example of a wireless communication system supporting an unlicensed band, based on an embodiment of the present disclosure. For example, FIG. 10 may include an unlicensed spectrum (NR-U) wireless communication system. The embodiment of FIG. 10 may be combined with various embodiments of the present disclosure.

In the following description, a cell operating in a licensed band (hereinafter, L-band) may be defined as an L-cell, and a carrier of the L-cell may be defined as a (DL/UL/SL) LCC. In addition, a cell operating in an unlicensed band (hereinafter, U-band) may be defined as a U-cell, and a carrier of the U-cell may be defined as a (DL/UL/SL) UCC. The carrier/carrier-frequency of a cell may refer to the operating frequency (e.g., center frequency) of the cell. A cell/carrier (e.g., CC) is commonly called a cell.

When the base station and the UE transmit and receive signals on carrier-aggregated LCC and UCC as shown in (a) of FIG. 10, the LCC and the UCC may be configured as a primary CC (PCC) and a secondary CC (SCC), respectively. The base station and the UE may transmit and receive signals on one UCC or on a plurality of carrier-aggregated UCCs as shown in (b) of FIG. 10. In other words, the base station and the UE may transmit and receive signals only on UCC(s) without using any LCC. For a standalone operation, PRACH transmission, PUCCH transmission, PUSCH transmission, SRS transmission, etc. may be supported on a UCell.

In the embodiment of FIG. 10, the base station may be replaced with the UE. In this case, for example, PSCCH transmission, PSSCH transmission, PSFCH transmission, S-SSB transmission, etc. may be supported on a UCell.

Unless otherwise noted, the definitions below are applicable to the following terminologies used in the present disclosure.
- Channel: a carrier or a part of a carrier composed of a contiguous set of RBs in which a channel access procedure is performed in a shared spectrum.
- Channel access procedure (CAP): a procedure of assessing channel availability based on sensing before signal transmission in order to determine whether other communication node(s) are using a channel. A basic sensing unit is a sensing slot with a duration of Tsl = 9 us. The base station or the UE senses a channel during a sensing slot duration. If power detected for at least 4 us within the sensing slot duration is less than an energy detection threshold Xₜₕᵣₑₛₕ, the sensing slot duration Tsl is considered to be idle. Otherwise, the sensing slot duration Tsl = 9 us is considered to be busy. CAP may also be referred to as listen before talk (LBT).
- Channel occupancy: transmission(s) on channel(s) by the base station/UE after a channel access procedure.
- Channel occupancy time (COT): a total time during which the base station/UE and any base station/UE(s) sharing channel occupancy can perform transmission(s) on a channel after the base station/UE perform a channel access procedure. In the case of determining COT, if a transmission gap is less than or equal to 25 us, the gap duration may be counted in the COT. The COT may be shared for transmission between the base station and corresponding UE(s).
- DL transmission burst: a set of transmissions without any gap greater than 16 us from the base station. Transmissions from the base station, which are separated by a gap exceeding 16 us are considered as separate DL transmission bursts. The base station may perform transmission(s) after a gap without sensing channel availability within a DL transmission burst.
- UL or SL transmission burst: a set of transmissions without any gap greater than 16 us from the UE. Transmissions from the UE, which are separated by a gap exceeding 16 us are considered as separate UL or SL transmission bursts. The UE may perform transmission(s) after a gap without sensing channel availability within a UL or SL transmission burst.
- Discovery burst: a DL transmission burst including a set of signal(s) and/or channel(s) confined within a window and associated with a duty cycle. In the LTE-based system, the discovery burst may be transmission(s) initiated by the base station, which includes PSS, an SSS, and cell-specific RS (CRS) and further includes non-zero power CSI-RS. In the NR-based system, the discover burst may be transmission(s) initiated by the base station, which includes at least an SS/PBCH block and further includes CORESET for a PDCCH scheduling a PDSCH carrying SIB1, the PDSCH carrying SIB1, and/or non-zero power CSI-RS.

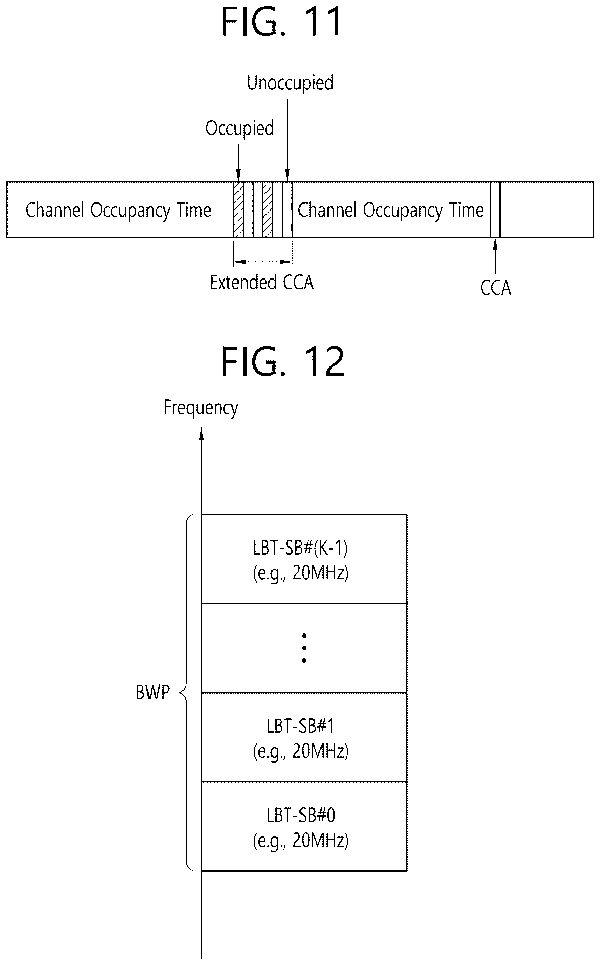

FIG. 11 shows a method of occupying resources in an unlicensed band, based on an embodiment of the present disclosure. The embodiment of FIG. 11 may be combined with various embodiments of the present disclosure.

Referring to FIG. 11, a communication node (e.g., base station, UE) within an unlicensed band should determine whether other communication node(s) is using a channel before signal transmission. To this end, the communication node within the unlicensed band may perform a channel access procedure (CAP) to access channel(s) on which transmission(s) is performed. The channel access procedure may be performed based on sensing. For example, the communication node may perform carrier sensing (CS) before transmitting signals so as to check whether other communication node(s) perform signal transmission. When the other communication node(s) perform no signal transmission, it is said that clear channel assessment (CCA) is confirmed. If a CCA threshold (e.g., X_{Thresh}) is predefined or configured by a higher layer (e.g., RRC), the communication node may determine that the channel is busy if the detected channel energy is higher than the CCA threshold. Otherwise, the communication node may determine that the channel is idle. If it is determined that the channel is idle, the communication node may start the signal transmission in the unlicensed band. The CAP may be replaced with the LBT.

Table 11 shows an example of the channel access procedure (CAP) supported in NR-U.

**[Table 11]**

| | Type | Explanation |
|---|---|---|
| DL | Type 1 CAP | CAP with random back-off |
| | | - time duration spanned by the sensing slots that are sensed to be idle before a downlink transmission(s) is random |
| | Type 2 CAP - Type 2A, 2B, 2C | CAP without random back-off |
| | | - time duration spanned by sensing slots that are sensed to be idle before a downlink transmission(s) is deterministic |
| UL or SL | Type 1 CAP | CAP with random back-off |
| | | - time duration spanned by the sensing slots that are sensed to be idle before an uplink or sidelink transmission(s) is random |
| | Type 2 CAP - Type 2A, 2B, 2C | CAP without random back-off |
| | | - time duration spanned by sensing slots that are sensed to be idle before an uplink or sidelink transmission(s) is deterministic |

Referring to Table 11, the LBT type or CAP for DL/UL/SL transmission may be defined. However, Table 11 is only an example, and a new type or CAP may be defined in a similar manner. For example, the type 1 (also referred to as Cat-4 LBT) may be a random back-off based channel access procedure. For example, in the case of Cat-4, the contention window may change. For example, the type 2 can be performed in case of COT sharing within COT acquired by the base station (gNB) or the UE.

Hereinafter, LBT-SubBand (SB) (or RB set) will be described.

In a wireless communication system supporting an unlicensed band, one cell (or carrier (e.g., CC)) or BWP configured for the UE may have a wideband having a larger bandwidth (BW) than in legacy LTE. However, a BW requiring CCA based on an independent LBT operation may be limited according to regulations. Let a subband (SB) in which LBT is individually performed be defined as an LBT-SB. Then, a plurality of LBT-SBs may be included in one wideband cell/BWP. A set of RBs included in an LBT-SB may be configured by higher-layer (e.g., RRC) signaling. Accordingly, one or more LBT-SBs may be included in one cell/BWP based on (i) the BW of the cell/BWP and (ii) RB set allocation information.

FIG. 12 shows a case in which a plurality of LBT-SBs are included in an unlicensed band, based on an embodiment of the present disclosure. The embodiment of FIG. 12 may be combined with various embodiments of the present disclosure.

Referring to FIG. 12, a plurality of LBT-SBs may be included in the BWP of a cell (or carrier). An LBT-SB may have, for example, a 20-MHz band. The LBT-SB may include a plurality of contiguous (P)RBs in the frequency domain, and thus may be referred to as a (P)RB set. While not shown, a guard band (GB) may be interposed between LBT-SBs. Accordingly, the BWP may be configured in the form of {LBT-SB #0 (RB set #0)+GB #0+LBT-SB #1 (RB set #1+GB #1) + ... +LBT-SB #(K-1) (RB set (#K-1))}. For convenience, LBT-SB/RB indexes may be configured/defined in an increasing order from the lowest frequency to the highest frequency.

Hereinafter, a channel access priority class (CAPC) will be described.

The CAPCs of MAC CEs and radio bearers may be fixed or configured to operate in FR1:
- Fixed to lowest priority for padding buffer status report (BSR) and recommended bit rate MAC CE;
- Fixed to highest priority for SRB0, SRB1, SRB3 and other MAC CEs;
- Configured by the base station for SRB2 and DRB.

When selecting a CAPC of a DRB, the base station considers fairness between other traffic types and transmissions while considering 5QI of all QoS flows multiplexed to the corresponding DRB. Table 12 shows which CAPC should be used for standardized 5QI, that is, a CAPC to be used for a given QoS flow. For standardized 5QI, CAPCs are defined as shown in the table below, and for non-standardized 5QI, the CAPC with the best QoS characteristics should be used.

**[Table 12]**

| CAPC | 5QI |
|---|---|
| 1 | 1, 3, 5, 65, 66, 67, 69, 70, 79, 80, 82, 83, 84, 85 |
| 2 | 2, 7, 71 |
| 3 | 4, 6, 8, 9, 72, 73, 74, 76 |
| 4 | - |
| NOTE: A lower CAPC value indicates a higher priority. | |

Hereinafter, a method of transmitting a downlink signal through an unlicensed band will be described. For example, a method of transmitting a downlink signal through an unlicensed band may be applied to a method of transmitting a sidelink signal through an unlicensed band.

The base station may perform one of the following channel access procedures (e.g., CAP) for downlink signal transmission in an unlicensed band.

### (1) Type 1 downlink (DL) CAP Method

In the type 1 DL CAP, the length of a time duration spanned by sensing slots sensed to be idle before transmission(s) may be random. The type 1 DL CAP may be applied to the following transmissions:
- Transmission(s) initiated by the base station including (i) a unicast PDSCH with user plane data or (ii) the unicast PDSCH with user plane data and a unicast PDCCH scheduling user plane data, or
- Transmission(s) initiated by the base station including (i) a discovery burst only or (ii) a discovery burst multiplexed with non-unicast information.

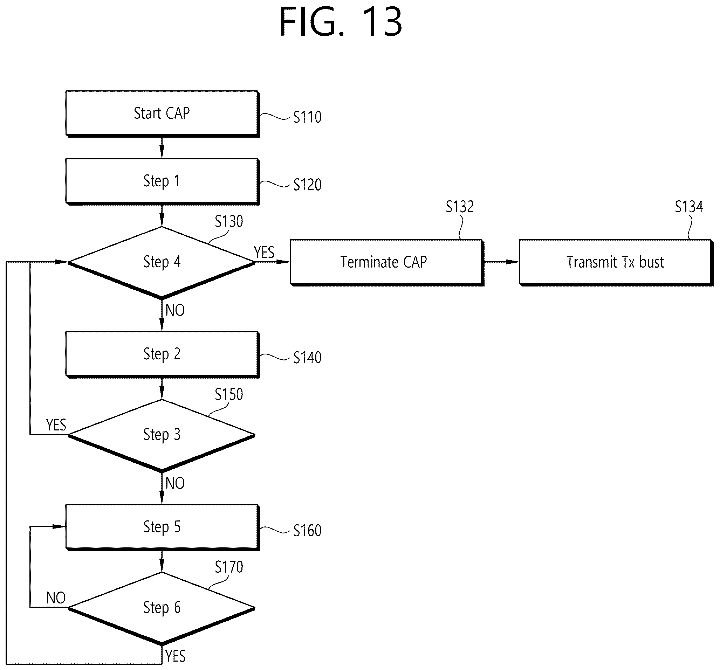

FIG. 13 shows CAP operations performed by a base station to transmit a downlink signal through an unlicensed band, based on an embodiment of the present disclosure. The embodiment of FIG. 13 may be combined with various embodiments of the present disclosure.

Referring to FIG. 13, the base station may sense whether a channel is idle for sensing slot durations of a defer duration Td. Then, if a counter N is zero, the base station may perform transmission (S134). In this case, the base station may adjust the counter N by sensing the channel for additional sensing slot duration(s) according to the following steps:
Step 1) (S120) The base station sets N to Nᵢₙᵢₜ (N= Nᵢₙᵢₜ), where Nᵢₙᵢₜ is a random number uniformly distributed between 0 and CWₚ. Then, step 4 proceeds.
Step 2) (S140) If N>0 and the base station determines to decrease the counter, the base station sets N to N-1 (N=N-1).
Step 3) (S150) The base station senses the channel for the additional sensing slot duration. If the additional sensing slot duration is idle (Y), step 4 proceeds. Otherwise (N), step 5 proceeds.
Step 4) (S130) If N=0 (Y), the base station terminates the CAP (S132). Otherwise (N), step 2 proceeds.
Step 5) (S160) The base station senses the channel until either a busy sensing slot is detected within an additional defer duration T_{d} or all the slots of the additional defer duration T_{d} are detected to be idle.
Step 6) (S170) If the channel is sensed to be idle for all the slot durations of the additional defer duration Td (Y), step 4 proceeds. Otherwise (N), step 5 proceeds.

Table 13 shows that mₚ, a minimum contention window (CW), a maximum CW, a maximum channel occupancy time (MCOT), and an allowed CW size, which are applied to the CAP, vary depending on channel access priority classes.

**[Table 13]**

| Channel Access Priority Class (p) | mₚ | CW_{min,p} | CW_{max,p} | T_{mcot,p} | allowed CWₚ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

Referring to Table 13, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration T_{d} is configured in the following order: duration Tr (16 us) + mp consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on HARQ-ACK feedback (e.g., the ratio of ACK or NACK) for a previous DL burst (e.g., PDSCH) (CW size update). For example, CWₚ may be initialized to CW_{min,p} based on the HARQ-ACK feedback for the previous DL burst. Alternatively, CWₚ may be increased to the next higher allowed value or maintained as it is.

### (2) Type 2 downlink (DL) CAP Method

In the type 2 DL CAP, the length of a time duration spanned by sensing slots sensed to be idle before transmission(s) may be determined. The type 2 DL CAP is classified into type 2A/2B/2C DL CAPs.

The type 2A DL CAP may be applied to the following transmissions. In the type 2A DL CAP, the base station may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}, where the duration T_{f} includes a sensing slot at the beginning thereof.
- Transmission(s) initiated by the base station including (i) a discovery burst only or (ii) a discovery burst multiplexed with non-unicast information, or
- Transmission(s) by the base station after a gap of 25 us from transmission(s) by the UE within a shared channel occupancy.

The type 2B DL CAP is applicable to transmission(s) performed by the base station after a gap of 16 us from transmission(s) by the UE within a shared channel occupancy time. In the type 2B DL CAP, the base station may perform transmission immediately after the channel is sensed to be idle for Tr = 16 us. T_{f} includes a sensing slot within 9 us from the end of the duration. The type 2C DL CAP is applicable to transmission(s) performed by the base station after a maximum of 16 us from transmission(s) by the UE within the shared channel occupancy time. In the type 2C DL CAP, the base station does not perform channel sensing before performing transmission.

Hereinafter, a method of transmitting an uplink signal through an unlicensed band will be described. For example, a method of transmitting an uplink signal through an unlicensed band may be applied to a method of transmitting a sidelink signal through an unlicensed band.

The UE may perform type 1 or type 2 CAP for UL signal transmission in an unlicensed band. In general, the UE may perform the CAP (e.g., type 1 or type 2) configured by the base station for UL signal transmission. For example, a UL grant scheduling PUSCH transmission (e.g., DCI formats 0_0 and 0_1) may include CAP type indication information for the UE.

### (1) Type 1 uplink (UL) CAP Method

In the type 1 UL CAP, the length of a time duration spanned by sensing slots sensed to be idle before transmission(s) is random. The type 1 UL CAP may be applied to the following transmissions.
- PUSCH/SRS transmission(s) scheduled and/or configured by the base station
- PUCCH transmission(s) scheduled and/or configured by the base station
- Transmission(s) related to a random access procedure (RAP)

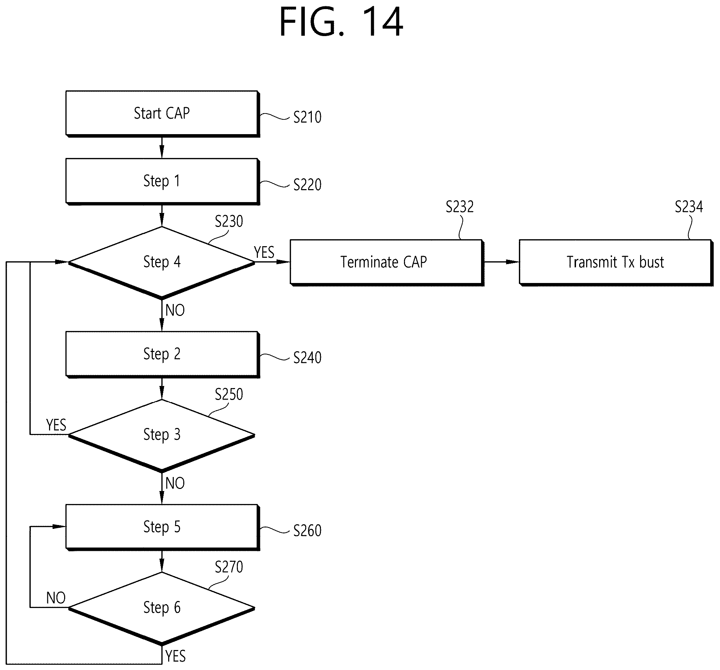

FIG. 14 shows type 1 CAP operations performed by a UE to transmit an uplink signal, based on an embodiment of the present disclosure. The embodiment of FIG. 14 may be combined with various embodiments of the present disclosure.

Referring to FIG. 14, the UE may sense whether a channel is idle for sensing slot durations of a defer duration T_{d}. Then, if a counter N is zero, the UE may perform transmission (S234). In this case, the UE may adjust the counter N by sensing the channel for additional sensing slot duration(s) according to the following steps:
Step 1) (S220) The UE sets N to Nᵢₙᵢₜ (N = Nᵢₙᵢₜ), where Nᵢₙᵢₜ is a random number uniformly distributed between 0 and CWₚ. Then, step 4 proceeds.
Step 2) (S240) If N>0 and the UE determines to decrease the counter, the UE sets N to N-1 (N = N-1).
Step 3) (S250) The UE senses the channel for the additional sensing slot duration. If the additional sensing slot duration is idle (Y), step 4 proceeds. Otherwise (N), step 5 proceeds.
Step 4) (S230) If N=0 (Y), the UE terminates the CAP (S232). Otherwise (N), step 2 proceeds.
Step 5) (S260) The UE senses the channel until either a busy sensing slot is detected within an additional defer duration T_{d} or all the slots of the additional defer duration T_{d} are detected to be idle.
Step 6) (S270) If the channel is sensed to be idle for all the slot durations of the additional defer duration Td (Y), step 4 proceeds. Otherwise (N), step 5 proceeds.

Table 14 shows that mₚ, a minimum CW, a maximum CW, a maximum channel occupancy time (MCOT), and an allowed CW size, which are applied to the CAP, vary depending on channel access priority classes.

**[Table 14]**

| Channel Access Priority Class (p) | mₚ | CW_{min,p} | CW_{max,p} | T_{ulmcot,p} | allowed CWₚ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6 or 10 ms | {15,31,63,127,255,511,1023} |
| 4 | 7 | 15 | 1023 | 6 or 10 ms | {15,31,63,127,255,511,1023} |

Referring to Table 14, a contention window size (CWS), a maximum COT value, etc. for each CAPC may be defined. For example, T_{d} may be equal to T_{f} + mₚ * Tₛₗ (T_{d} = T_{f} + mₚ * Tₛₗ).

The defer duration Td is configured in the following order: duration T_{f} (16 us) + mp consecutive sensing slot durations Tₛₗ (9 us). T_{f} includes the sensing slot duration Tₛₗ at the beginning of the 16 us duration.

The following relationship is satisfied: CW_{min,p} <= CWₚ <= CW_{max,p}. CWₚ may be configured by CWₚ = CW_{min,p} and updated before step 1 based on an explicit/implicit reception response for a previous UL burst (e.g., PUSCH) (CW size update). For example, CWₚ may be initialized to CW_{min,p} based on the explicit/implicit reception response for the previous UL burst. Alternatively, CWₚ may be increased to the next higher allowed value or maintained as it is.

### (2) Type 2 uplink (UL) CAP Method

In the type 2 UL CAP, the length of a time duration spanned by sensing slots sensed to be idle before transmission(s) may be determined. The type 2 UL CAP is classified into type 2A/2B/2C UL CAPs. In the type 2A UL CAP, the UE may perform transmission immediately after the channel is sensed to be idle at least for a sensing duration T_{short_dl} = 25 us. Herein, T_{short_dl} includes the duration T_{f} (=16 us) and one sensing slot duration immediately after the duration T_{f}. In the type 2A UL CAP, T_{f} includes a sensing slot at the beginning thereof. In the type 2B UL CAP, the UE may perform transmission immediately after the channel is sensed to be idle for the sensing duration T_{f} = 16 us. In the type 2B UL CAP, Tr includes a sensing slot within 9 us from the end of the duration. In the type 2C UL CAP, the UE does not perform channel sensing before performing transmission.

For example, according to a type 1 LBT-based NR-U operation, a UE having uplink data to transmit may select a CAPC mapped to the 5QI of the data, and the UE may perform the NR-U operation by applying parameters of the corresponding CAPC (e.g., minimum contention window size, maximum contention window size, mₚ, etc.). For example, the UE may select a Backoff Counter (BC) after selecting a random value between the minimum CW and maximum CW mapped to the CAPC. In this case, for example, the BC may be a positive integer less than or equal to the random value. A UE that senses the channel may decrement the BC by 1 if the channel is idle. When the BC becomes zero and the UE detects that the channel is idle for a duration of T_{d} (T_{d} = T_{f} + mₚ * Tₛₗ), the UE may occupy the channel and attempt data transmission. For example, Tₛₗ (= 9 usec) is a basic sensing unit or sensing slot, and may include a measurement duration of at least 4 usec. For example, the first 9 usec of Tf(= 16 usec) may be configured as Tₛₗ.

For example, according to the type 2 LBT-based NR-U operation, the UE may transmit data by performing the type 2 LBT (e.g., type 2A LBT, type 2B LBT, or type 2C LBT) within COT.

For example, the type 2A (also referred to as Cat-2 LBT (one shot LBT) or one-shot LBT) may be 25 usec one-shot LBT. In this case, transmission may start immediately after idle sensing for at least a 25 usec gap. The type 2A may be used to initiate transmission of SSB and non-unicast DL information. That is, the UE may sense a channel for 25 usec within COT, and if the channel is idle, the UE may attempt to transmit data by occupying the channel.

For example, the type 2B may be 16 usec one-shot LBT. In this case, transmission may start immediately after idle sensing for a 16 usec gap. That is, the UE may sense a channel for 16 usec within COT, and if the channel is idle, the UE may attempt to transmit data by occupying the channel.

For example, in the case of the type 2C (also referred to as Cat-1 LBT or No LBT), LBT may not be performed. In this case, transmission may start immediately after a gap of up to 16 usec and a channel may not be sensed before the transmission. The duration of the transmission may be up to 584 usec. The UE may attempt transmission after 16 usec without sensing, and the UE may perform transmission for up to 584 usec.

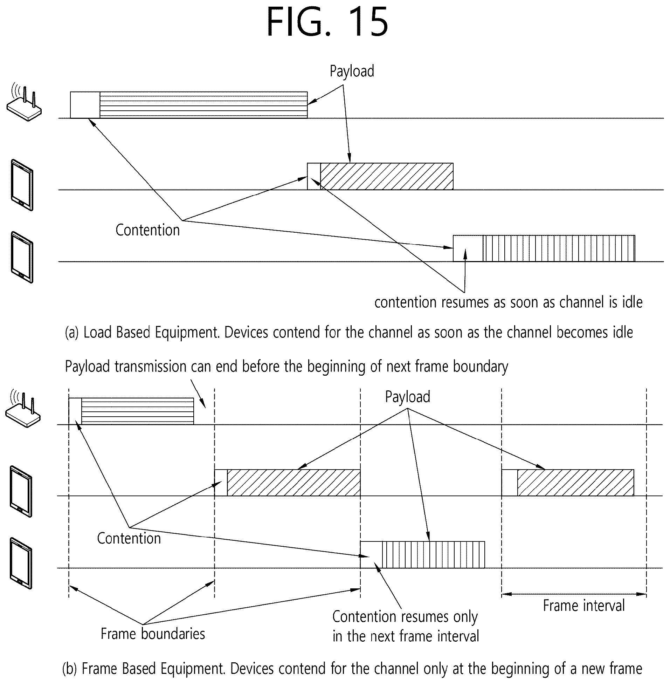

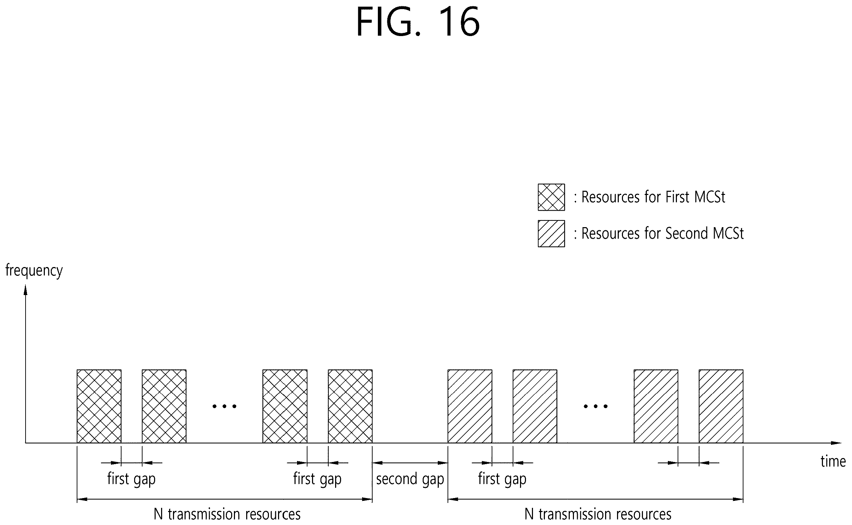

FIG. 15 shows a channel access procedure, based on an embodiment of the present disclosure. Specifically, (a) of FIG. 15 shows an example of a dynamic channel access procedure (load based equipment, LBE), and (b) of FIG. 16 shows an example of a semi-static channel access procedure (frame based equipment, FBE). The embodiment of FIG. 15 may be combined with various embodiments of the present disclosure.

Referring to (a) of FIG. 15, if a channel is idle, the UE may perform contention with other UEs on an unlicensed band to immediately occupy the channel. In addition, if the UE occupies the channel, the UE may transmit data.

Referring to (b) of FIG. 15, the UE may perform contention with other UEs on an unlicensed band at the last time within a synchronized frame boundary (or a fixed frame period (FFP)) (e.g., certain time before the start of the next FFP (or starting time)). In addition, if the UE occupies a channel within a fixed frame period (FFP), the UE may transmit data. The data transmission should complete before the next FFP begins.

FIG. 16 shows an example of N transmission resources for multi-consecutive slots transmission (MCSt), based on an embodiment of the present disclosure. The embodiment of FIG. 16 may be combined with various embodiments of the present disclosure.

Referring to FIG. 16, as part of reducing the overhead caused by a channel access operation, a transmitting node (e.g., UE, base station, etc.) may perform consecutive transmissions by using N transmission resources for multi-consecutive slots transmission (MCSt), and the transmitting node may skip a channel sensing operation (e.g., listen-before-talk (LBT) or a channel access procedure) in the middle of the transmission for the same transmission burst (the consecutive transmissions). For example, the number N of consecutive transmission resources for the MCSt may be (pre)configured.

According to one embodiment of the present disclosure, as part of reducing the overhead caused by a channel access operation, a transmitting node (e.g., UE, base station, etc.) may perform consecutive transmissions by using N transmission resources for MCSt such that a gap (e.g., a first gap) between the transmissions (resources) is less than or equal to a certain level (e.g., 16 µs), and the transmitting node may skip the channel sensing operation during the middle of the transmission for the same transmission burst (the consecutive transmissions). For example, when a gap (e.g., a second gap) between consecutive transmissions (resources) is greater than or equal to a certain level (e.g., 16 µs), each consecutive transmission (resource) (e.g., the resources for a first MCSt and the resources for a second MCSt) may be regarded as a separate consecutive transmission (resource) (transmission burst). For example, even when a gap (e.g., the second gap) between consecutive transmissions (resources) is less than or equal to a certain level (e.g.,16 µs), consecutive transmissions that use N transmission resources (e.g., the resources for a first MCSt and the resources for a second MCSt) may be regarded as separate consecutive transmissions (transmission bursts). For example, the number N of consecutive transmission resources for the MCSt may be (pre)configured.

For example, in an SL-U (sidelink-unlicensed spectrum), UE should first occupy a channel in the sidelink unlicensed band in order to perform SL data transmission. For example, to occupy a channel in the sidelink unlicensed band, the UE may perform listen-before-talk (LBT) (e.g., Type 1 LBT: random backoff-based LBT) to search for an unlicensed band channel that is not occupied by another UE. For example, when the UE performing LBT discovers a channel that is not occupied by other UEs, the UE may occupy the channel and perform SL data transmission. For example, if the UE fails in the LBT procedure, the UE may reperform LBT by adjusting a parameter value (e.g., a contention window size) for performing LBT, and may continue the process of searching for an unlicensed band channel that is not occupied by the UE.

For example, a transmitting UE that performs sidelink communication in an SL-U may perform an LBT operation to occupy an unlicensed band channel. For example, when the UE succeeds in the LBT, the UE may transmit a packet within the occupied channel. If the LBT fails (e.g., when the channel is determined to be busy as a result of sensing performed during a sensing slot interval) sidelink transmission may not be performed because the unlicensed band channel is not occupied. For example, while performing an LBT operation to occupy an unlicensed band channel, the MAC layer of the transmitting UE may receive from the physical layer an indication of an SL LBT failure event.

According to one embodiment of the present disclosure, UE in the SL-U may perform an operation that is based on an SL LBT failure event.

For example, the UE may receive from a base station the following parameters for an SL LBT failure management, and may perform an SL LBT failure recovery operation or an SL LBT failure declaration operation.
- sl-lbt-FailureInstanceMaxCount: when the UE detects an SL LBT failure, the UE may increment SL_LBT_COUNTER by 1, and if the UE detects the SL LBT failure sl-lbt-FailureInstanceMaxCount times before a sl-lbt-FailureDetectionTimer expires, the UE may declare an SL LBT failure.
- sl-lbt-FailureDetectionTimer: the UE starts this timer when the SL LBT failure is detected; while the timer is running, the UE may perform an SL LBT failure recovery operation.

For example, when the MAC layer of the transmitting UE receives an SL LBT failure event from the physical layer (i.e., when the UE detects the SL LBT failure), the MAC layer may start the sl-lbt-FailureDetectionTimer and simultaneously may increment SL_LBT_COUNTER by 1. In addition, for example, while the sl-lbt-FailureDetectionTimer is running, the UE may perform an SL LBT recovery operation. That is, for example, if the UE again detects an SL LBT failure while the sl-lbt-FailureDetectionTimer is running, the UE may increment SL_LBT_COUNTER by 1. For example, if SL_LBT_COUNTER, which is incremented due to SL LBT detections, does not reach a threshold (e.g., sl-lbt-FailureInstanceMaxCount) before the sl-lbt-FailureDetectionTimer expires, the UE may regard the SL LBT failure as recovered, and may continue normal sidelink communication by using the sidelink grant being used.

However, for example, if SL_LBT_COUNTER, which is incremented due to SL LBT detections, reaches the threshold (e.g., sl-lbt-FailureInstanceMaxCount) before the sl-lbt-FailureDetectionTimer expires, the UE may declare a consistent SL LBT failure. For example, when the UE declares the consistent SL LBT failure, the UE may declare an SL radio link failure (SL RLF) for a sidelink session (e.g., in the case of a unicast session, a pair of source layer-2 ID and destination layer-2 ID; in the case of a groupcast/broadcast session, a groupcast/broadcast destination layer-2 ID), and may release the connection of the sidelink session. In addition, for example, the UE may release a sidelink grant (e.g., a mode 1 sidelink grant or a mode 2 sidelink grant) that is operating or being used in the released sidelink session.

However, for example, if the SL_LBT_COUNTER, which is increased due to detection of an SL LBT failure before expiration of an sl-lbt-FailureDetectionTimer, reaches a threshold number of times (e.g., sl-lbt-FailureInstanceMaxCount), the SL LBT failure may be considered unrecovered and/or a consistent SL LBT failure may be declared. In addition, for example, the transmission UE may declare an SL LBT failure if the SL LBT failure is not recovered until the sl-lbt-FailureDetectionTimer expires.

For example, when the transmitting UE declares the SL LBT failure, the UE may perform at least one of the following operations.

For example, the sidelink grant for a specific unicast link (e.g., a pair of Source Layer-2 ID and Destination Layer-2 ID or a PC5 link identifier) where an SL LBT failure occurred may be released/discarded/ignored. For example, when the transmission UE establishes a plurality of unicast links with a destination UE with which a unicast configuration is established, the transmission UE may release/discard/ignore only the sidelink grant (e.g., mode 1 grant, mode 2 grant) that is allocated or generated for the specific unicast link for which the SL LBT failure is declared, and/or may report an ACK to the base station through a PUCCH so that the base station no longer allocates mode 1 sidelink grants. In addition, for example, it is possible to release only specific unicast links where SL LBT failures occur. For example, when an LBT failure is declared for a specific unicast link (e.g., a pair of Source Layer-2 ID and Destination Layer-2 ID or a PC5 link identifier), the AS layer may report to a higher layer (e.g., a V2X layer) an identifier (e.g., a PC5 link identifier) for the unicast link for which the LBT failure is declared and an indication of the SL LBT failure. For example, when the V2X layer receives the SL LBT failure indication and the PC5 link identifier from the AS layer, the V2X layer may release the SL unicast link corresponding to the PC5 link identifier.

In addition, for example, the UE may perform a detection operation of LBT failure for each sidelink resource pool or each sidelink RB set. For example, the physical layer of the UE may detect a sidelink LBT failure for each sidelink resource pool or each sidelink RB set, and may report an SL LBT failure indication to the MAC layer. For example, when the MAC layer receives the SL LBT failure indication from the physical layer, the MAC layer may increment SL_LBT_COUNTER by 1 for each sidelink resource pool or sidelink RB set. For example, when the SL LBT failure reaches a threshold for each sidelink resource pool or each sidelink RB set, the UE may declare a consistent SL LBT failure for the corresponding sidelink resource pool or sidelink RB set, and for example, may switch to another RB set or resource pool, and for example, may continue the LBT operation by switching to the other RB set or resource pool. For example, if the UE declares consistent SL LBT failures for all sidelink resource pools or all sidelink RB sets, an SL RLF may be declared for the sidelink session (e.g., SL RLF may be declared only for unicast), and for example, the sidelink session (unicast/broadcast/groupcast) may be released.

According to one embodiment of the present disclosure, the proposal(s) in the present disclosure for UE operation based on Sidelink Transmission Burst may be equally extended and applied to the case where the UE performs Multiple Consecutive Slot Transmission (MCSt) based operation (UE operation when MCSt resources are allocated) in the sidelink.

For example, MCSt may mean that consecutive sidelink slots less than or equal to a certain gap are configured as transmission resources for a sidelink transmission, and the UE may transmit the same SL transport block (TB) or a plurality of SL TBs by using multiple consecutive slots (e.g., it refers to a set of sidelink transmissions using consecutive sidelink slots with a gap between sidelink slots of 16usec or less, and continuous transmission may be performed without LBT during the gap between sidelink transmissions using consecutive slots). In addition, for example, the UE may perform LBT in a first slot and may transmit an SL TB without performing LBT for SL TB transmitted through consecutive slots (e.g., consecutive slots whose gap is less than or equal to a certain gap) following the first slot. For example, by performing a sidelink transmission based on MCSt, the UE may reduce overhead (e.g., the LBT operation) of the transmission operation in the sidelink unlicensed band because sidelink data may be transmitted without performing LBT during the gap between sidelink transmissions.

In the present disclosure, a method of selecting an SL-CAPC and a resource reselection operation for a UE during MCSt operation may be proposed.

For example, the base station may configure whether MCSt operation is allowed (MCSt enabled or MCSt disabled) per sidelink resource pool (or per configured sidelink grant, or per logical channel, or per RB set, or per SL priority, or per sidelink service type or cast type, or per quality of service (QoS) parameter(s) (e.g., packet delay budget (PDB))), and/or the configuration of whether MCSt operation is allowed per sidelink resource pool (or per configured sidelink grant, or per logical channel, or per RB set, or per SL priority, or per sidelink service type or cast type, or per quality of service (QoS) parameter(s) (e.g., packet delay budget (PDB))) may be pre-configured. For example, a transmission UE that does not perform MCSt operation may select either a sidelink resource pool in which MCSt operation is allowed or a sidelink resource pool in which MCSt operation is not allowed for SL transport block (TB) or SL data, and may select a sidelink grant within the selected sidelink resource pool. In addition, for example, a transmission UE that performs MCSt operation may select a sidelink resource pool in which MCSt operation is allowed for SL transport block (TB) or SL data, and may select a sidelink grant within the selected sidelink resource pool.

The MCSt-based sidelink TB transmission of the transmission UE may consist of a blind sidelink TB transmission (SL TB transmitted without HARQ feedback) and a HARQ feedback-based SL TB transmission, and for example, when the preceding MCSt transmission is a blind sidelink TB transmission and the subsequent MCSt transmission is a HARQ feedback-based SL TB transmission, the transmission UE may consider only a sidelink resource pool where a PSFCH is configured when selecting a sidelink resource pool for generating a sidelink grant related to the blind sidelink TB transmission.

In another embodiment of the present disclosure, for example, when the transmission UE intends to transmit a HARQ feedback-based sidelink (SL) TB (e.g., or a HARQ feedback-enabled MAC PDU) using an MCSt scheme, the UE may indicate a HARQ feedback option as HARQ feedback disabled on the SCI for transmissions of the SL TB except for the last N transmissions, and for example, the HARQ feedback option for the last N transmissions may be indicated as HARQ feedback enabled (e.g., such an operation may be configured by the base station to be allowed per logical channel attribute or per RB set, or may be pre-configured). In addition, for example, for transmissions related to sidelink (SL) TBs except for the last N transmissions, the transmission UE may randomly select a sidelink resource pool from among a sidelink resource pool where a PSFCH is configured and a sidelink resource pool where a PSFCH is not configured. And/or, for example, the sidelink resource pool (a sidelink resource pool where a PSFCH is configured or a sidelink resource pool where a PSFCH is not configured) may be selected by UE implementation.

For example, the transmission UE may select an SL-channel access priority class (CAPC) to perform LBT (e.g., Type 1 LBT or Type 2 LBT) for MCSt-based SL TB transmission. For example, when a transmission UE performs LBT in the 1st slot transmission (e.g., 1st slot transmission on all consecutive slot transmissions) for MCSt transmission, if LBT fails, the transmission UE may reperform LBT by selecting an SL-CAPC with a lower (or higher) priority than the SL-CAPC used in the previous LBT failure in the 1st slot transmission (e.g., 1st slot transmission on all consecutive slot transmissions) for the next MCSt transmission.

For example, the transmission UE may select SL-CAPC to perform LBT (e.g., Type 1 LBT or Type 2 LBT) for MCSt-based SL TB transmission. For example, if the LBT fails when performing LBT in one slot transmission among a plurality of slots for MCSt transmission, the transmission UE may reperform LBT by selecting an SL-CAPC with a lower (or higher) priority than the SL-CAPC used in the previous LBT failure in the slot transmission for the next MCSt transmission.

According to one embodiment of the present disclosure, for example, SL-CAPC applied to a sidelink UE to perform LBT in a sidelink unlicensed band may be defined as at least one of the following.

For example, an SL-CAPC may be mapped to each type of data traffic corresponding to the SL-CAPC.

For example, a contention window size (CWS) and/or a maximum channel-occupancy time may be defined for each SL-CAPC.

For example, for SL-CAPC 1 (the highest priority class), the contention window size may be configured with the smallest value among SL-CAPC, and since the contention window size is the smallest, it may take the least time until the channel is occupied. For example, the Clear Channel Assessment (the process of determining whether the channel is busy or idle) may take the least time.

For example, as the SL-CAPC value increases in the order of SL-CAPC 1, SL-CAPC 2, SL-CAPC 3, and SL-CAPC 4, the SL channel access priority may be lowered.

For example, for SL-CAPC 4 (the lowest priority class), the contention window size may be configured with the largest value among SL-CAPC. For example, since the contention window size is the largest, it may take the longest time until the channel is occupied. For example, the Clear Channel Assessment (the process of determining whether the channel is busy or idle) may take the most time.

In another embodiment of the present disclosure, for example, when the transmission UE transmits sidelink data through MCSt(s), if an LBT failure occurs in all slots of the MCSt(s), the UE may trigger a resource (re)selection procedure to generate or (re)select new resources. In another embodiment of the present disclosure, for example, when the transmission UE transmits sidelink data through MCSt(s), if an LBT failure occurs in one slot (or in predefined N slots, or in at least one or more slots) among the slots for the MCSt(s), the UE may trigger a resource (re)selection procedure to generate or (re)select new resources. In this case, for example, the transmission UE may (re)select only the slot where the LBT failure occurred, or may (re)select all the slots for the MCSt.

In one embodiment of the present disclosure, when the transmission UE performs MCSt operation with N slots (e.g., 3 slots), if an LBT failure occurs in the transmission of the first slot, the transmission UE may perform Type 1 LBT in the second slot. In addition, for example, in order not to perform Type 1 LBT for the resource (re)selection of the first slot transmission, the transmission UE may (re)select a resource in a slot that follows the Nth (e.g., 3rd) slots (e.g., with less than or equal to a threshold gap). In addition, the transmission UE may perform an operation based on at least one of the following restrictions when (re)selecting a resource for MCSt operation. For example, when (re)selecting resources for the first slot, the (re)selected frequency resource may be less than or equal to the frequency resource amount of the second slot, and the energy detection (ED) threshold applied when performing Type 1 LBT using the (re)selected resource may be equal to the ED threshold used for Type 1 LBT for transmission in the second slot. In addition, for example, the resources to be considered when (re)selecting transmission resources for the first slot may be limited to the resources in the area covered by the frequency range for transmission of the second slot (or the common area of the frequencies for transmission of the second slot and the frequencies for transmission of the third slot).

In another embodiment of the present disclosure, for example, when a transmission UE performs an MCSt operation with N (e.g., 3) slots, if an LBT failure occurs in the transmission of the second slot (e.g., when LBT succeeds in the transmission of the first slot and LBT fails in the transmission of the second slot), when (re)selecting a resource for the transmission of the second slot, the transmission UE may (re)select a resource from the resource after the Nth (e.g., 3rd) slot (e.g., due to reasons such as processing time).

In another embodiment of the present disclosure, when the amount of frequency resources among transmissions configuring the MCSt may differ during MCSt operation of the transmission UE (for example, when the transmission of the first slot covers the frequency domain of the second and third slot transmissions, but the transmission of the second slot does not cover the frequency domain of the third slot transmission), if a preceding transmission is dropped due to an LBT failure and the frequency domain coverage relationship among the remaining transmissions is not satisfied, resources may be (re)selected through resource (re)selection so that the frequency domain coverage relationship is satisfied (for example, by (re)selecting the resource for the Nth (e.g., 3rd) slot transmission such that the frequency domain of the second slot transmission is covered by that of the Nth (e.g., 3rd) slot transmission).

In another embodiment of the present disclosure, when multiple sidelink TB transmissions are performed in MCSt transmission and an LBT failure occurs only in a slot for one sidelink TB transmission among the multiple sidelink TB transmissions, the transmission UE may trigger a resource (re)selection procedure only for the sidelink TB transmission (e.g., TB 1) of the slot in which the LBT failed, and (re)select the resource. In addition, in another embodiment of the present disclosure, when multiple sidelink TB transmissions are performed in an MCSt transmission and an LBT failure occurs only in a slot for one sidelink TB transmission among the multiple sidelink TB transmissions, resources for all sidelink TB transmissions (e.g., TBl and TB 2) for the MCSt operation may be (re)selected.

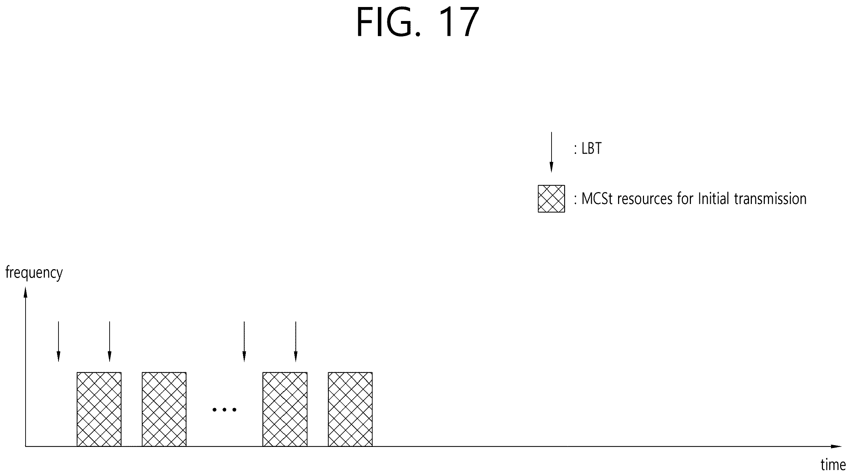

FIG. 17 is a drawing representing a method of performing wireless communication related to LBT, based on an embodiment of the present disclosure. The embodiment of FIG. 17 may be combined with various embodiments of the present disclosure.

Referring to FIG. 17, according to one embodiment of the present disclosure, for example, a TX UE may obtain information related to a set of resources (e.g., channels, RB sets) within an unlicensed band (shared spectrum). For example, the TX UE may perform LBT (channel access procedure) prior to transmission on a set of resources within the unlicensed band. For example, the TX UE may perform LBT prior to transmission on each of the initial transmissions for the first sidelink process (e.g., the first TB) on each of the first resources for MCSt. For example, a TX UE may perform LBT prior to each transmission among the retransmissions for the first sidelink process (e.g., the first TB) on the second resources for MCSt. For example, if the LBT fails, each transmission may not be performed. For example, the LBT may include sensing to determine if the detected energy (power) within the sensing duration is less than an energy detection threshold (ED threshold). For example, if the energy within the sensing duration for the corresponding set of resources is not less than the ED threshold, each transmission may not be performed at all and may be delayed. In particular, for example, if the channel environment for the resource set is congested, each transmission may not be performed at all and may be delayed due to continuous LBT failures. However, for example, initial transmissions and/or retransmissions may not be performed, so they may not be counted as transmissions, and thus, for example, restrictions in case of the number of (re)transmissions being greater than a threshold may not work. Therefore, for example, transmission attempts on resources for MCSt to eliminate delays through the LBT may become somewhat pointless.

According to one embodiment of the present disclosure, for example, a TX UE may trigger resource (re)selection if transmission is not performed due to an LBT failure on one of the resources for MCSt (e.g., a resource after the first resource among N resources for MCSt). For example, if resource re-selection is triggered due to an LBT failure on one resource, all resources for MCSt may be newly (re)selected. For example, LBT may be performed again on all resources that have been newly (re)selected for MCSt. Therefore, for example, LBT may have to be performed starting from the first resource among all resources that have been newly (re)selected for MCSt. For example, the LBT overhead may be increased contrary to one of the purposes of MCSt, which is No LBT.

According to one embodiment of the present disclosure, for example, a TX UE may trigger resource (re)selection if transmission is not performed due to LBT failure on all resources among resources related to MCSt. For example, a TX UE may trigger resource (re)selection if transmission is not performed on all resources related to MCSt and sidelink process (e.g., TB) due to LBT failure. For example, based on the resource (re)selection being triggered, the TX UE may (re)select a transmission resource within the selection window based on sensing. Therefore, according to one embodiment of the present disclosure, for example, based on the (re)selected transmission resource, MCSt may be performed on resources with no or less LBT failures. For example, in the case of no LBT failure, transmission on resources for MCSt may be performed without LBT.

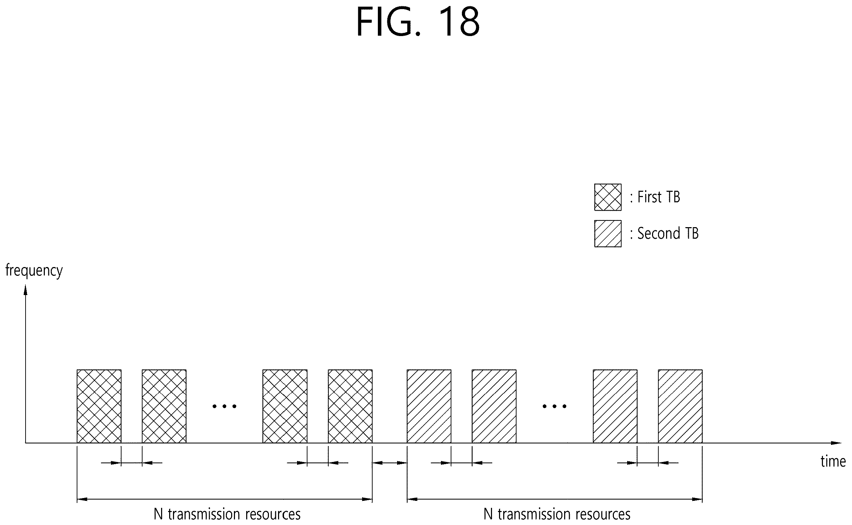

FIG. 18 is a drawing representing a method of performing wireless communication related to listen-before-talk (LBT), based on an embodiment of the present disclosure. The embodiment of FIG. 18 may be combined with various embodiments of the present disclosure.

Referring to FIG. 18, according to one embodiment of the present disclosure, for example, resources (grants) for initial transmission for TBs (e.g., 1st TB, 2nd TB) and/or retransmission for TBs (e.g., 1st TB, 2nd TB) may be selected. For example, the resource (grant) may include a resource (grant) related to each sidelink process (e.g., TB). For example, the resource (grant) may include a resource (grant) for MCSt. For example, LBT may be performed prior to transmission on N resources for MCSt(s). For example, LBT may include Type 1/Type 2 (2A, 2B, 2C) channel access procedures. For example, if LBT fails, transmission may not be performed. For example, LBT may use CAPC values.

For example, 2N transmission resources (grants) for MCSt may be selected from the resource pool. For example, LBT for initial transmission of the first TB on the first transmission resource among the N transmission resources for MCSt may fail. For example, LBT for retransmission of the first TB on the second transmission resource among the N transmission resources for MCSt may fail. For example, LBT for initial transmission of the second TB on the N+1th transmission resource among the 2N transmission resources for MCSt may fail. For example, LBT for retransmission of the second TB on the N+2th transmission resource among the 2N transmission resources for MCSt may fail. For example, (unlike FIG. 18) LBT for initial transmission and/or retransmission of the first TB on the 1st, 3rd, 5th, ..., 2N-1th transmission resource among 2N transmission resources (grants) for MCSt may fail. For example, (unlike in Fig. 18) LBT for initial transmission and/or retransmission of the second TB on the 2nd, 4th, 6th, ..., 2Nth transmission resources (grants) for MCSt may fail. For example, the gap between the N transmission resources for MCSt and the N+1 to 2N transmission resources for the next MCSt may be less than or equal to a threshold. For example, the gap between the N transmission resources for MCSt and the N+1 to 2N transmission resources for the next MCSt may be greater than or equal to a threshold.

For example, if a MAC PDU is not transmitted (e.g., initial transmission, retransmission, initial transmission and retransmission) within any of the resources related to a sidelink process (e.g., transport block (TB)) for multi-consecutive slot transmission due to a Sidelink LBT failure, the TX UE (e.g., MAC entity) may trigger resource (re)selection.

For example, if a transmission is not performed on any of the resources for the initial transmission of one TB (e.g., first TB, second TB) due to an LBT failure, resource (re)selection may be triggered. For example, if a transmission is not performed on any of the resources for retransmission of one TB (e.g., first TB, second TB) due to an LBT failure, resource (re)selection may be triggered. For example, if transmission is not performed on any of the resources for initial transmission and retransmission of one TB (e.g., first TB, second TB) due to LBT failure, resource (re)selection may be triggered. For example, the resource (re)selection may include resource (re)selection related to at least one resource among the resources for MCSt. For example, the resource (re)selection may include resource (re)selection related to at least one resource among the resources for transmission of one TB. For example, the resource (re)selection may include resource (re)selection related to at least one resource among the resources for transmission of a plurality of TBs.

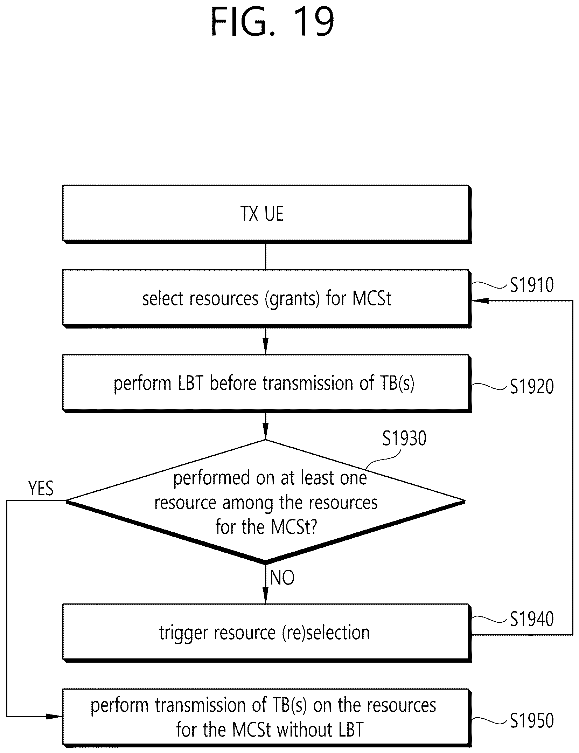

FIG. 19 is a drawing representing a procedure for performing wireless communication related to listen-before-talk (LBT), based on an embodiment of the present disclosure. The embodiment of FIG. 19 may be combined with various embodiments of the present disclosure.

Referring to FIG. 19, according to one embodiment of the present disclosure, for example, a TX UE may select a resource (grant) for MCSt. For example, the resource (grant) may be selected within a resource pool. For example, the resource (grant) may be selected within a selection window based on sensing. For example, the resource (grant) may be a resource (grant) for transmission of TB(s).

For example, the TX UE may perform LBT before transmission of TB(s) on resources for MCSt.

For example, if LBT is successful before transmission of TB(s) on resources for MCSt, transmission of TB(s) on resources for MCSt may be performed without LBT.

For example, if transmission of one TB is performed on at least one resource for MCSt, the TX UE may perform transmission of TB(s) on the resources for MCSt without LBT (e.g., sensing).

For example, if transmission of one TB is not performed on at least one resource for MCSt, the TX UE may trigger resource (re)selection. For example, the resource (re)selection may include resource (re)selection related to at least one resource for MCSt. For example, the resource (re)selection may include resource (re)selection related to at least one resource for transmission of a single TB. For example, the resource (re)selection may include resource (re)selection related to at least one resource for transmission of a plurality of TBs.

According to one embodiment(s) of the present disclosure, for example, by triggering resource (re)selection when LBT fails in all resources for MCSt for one TB, resource (re)selection delay may be prevented. For example, by preventing delay in resource (re)selection, transmission being performed on resources that are unsuitable for SL communication may be prevented. For example, by performing resource (re)selection more quickly, transmission on resources suitable for SL communication may be performed more quickly. For example, by performing resource (re)selection, the effectiveness of MCSt (No-LBT gain) may be improved. For example, by performing resource (re)selection more quickly, the reliability of transmission may be improved.

The term "channel" as specified in this disclosure may be replaced with "carrier" or "Resource Block set (RB set) of a specific carrier" or "band".

For example, whether or not the (some) proposed method/rule of the present disclosure is applied and/or related parameter(s) (e.g., threshold value(s)) may be configured (differently or independently) for each SL-Channel Access Priority Class (CAPC). For example, whether or not the (some) proposed method/rule of the present disclosure is applied and/or related parameter(s) (e.g., threshold value(s)) may be configured (differently or independently) for each SL-LBT type (e.g., Type 1 LBT, Type 2A LBT, Type 2B LBT, Type 2C LBT). For example, whether or not the (some) proposed method/rule of the present disclosure is applied and/or related parameter(s) (e.g., threshold value(s)) may be configured specifically (or differently or independently) depending on whether or not Frame Based LBT is applied. For example, whether or not the (some) proposed method/rule of the present disclosure is applied and/or related parameter(s) (e.g., threshold value(s)) may be configured specifically (or differently or independently) depending on whether or not Load Based LBT is applied.

For example, whether or not the (some) proposed method/rule of the present disclosure is applied and/or related parameter(s) (e.g., threshold value(s)) may be specifically (or differently or independently) configured depending on whether LBT is successful or failed, depending on the energy detection level related to LBT, depending on the type of sidelink channel (e.g., PSCCH/PSSCH, PSFCH, SL-SSB), depending on whether MCSt (Multi-Consecutive Slot Transmission) is applied, depending on whether a multi-PSFCH occasion is applied, depending on the order or location of resources constituting the MCSt, depending on whether multiple starting points are configured within a single slot, and depending on whether a 1st starting point (or a 2nd starting point) is applied.

For example, whether or not the (some) proposed method/rule of the present disclosure is applied and/or related parameter(s) (e.g., threshold value(s)) may be configured (differently or independently) for each resource pool. For example, whether or not the (some) proposed method/rule of the present disclosure is applied and/or related parameter(s) (e.g., threshold value(s)) may be configured (differently or independently) for each congestion level. For example, whether or not the (some) proposed method/rule of the present disclosure is applied and/or related parameter(s) (e.g., threshold value(s)) may be configured (differently or independently) for each service priority. For example, whether or not the (some) proposed method/rule of the present disclosure is applied and/or related parameter(s) (e.g., threshold value(s)) may be configured (differently or independently) for each service type. For example, whether or not the (some) proposed method/rule of the present disclosure is applied and/or related parameter(s) (e.g., threshold value(s)) may be configured (differently or independently) for each QoS requirement (e.g., latency, reliability). For example, whether or not the (some) proposed method/rule of the present disclosure is applied and/or related parameter(s) (e.g., threshold value(s)) may be configured (differently or independently) for each PQI (5G QoS identifier (5QI) for PC5). For example, whether or not the (some) proposed method/rule of the present disclosure is applied and/or related parameter(s) (e.g., threshold value(s)) may be configured (differently or independently) for each traffic type (e.g., periodic generation or aperiodic generation). For example, whether or not the (some) proposed method/rule of the present disclosure is applied and/or related parameter(s) (e.g., threshold value(s)) may be configured (differently or independently) for each SL transmission resource allocation mode (e.g., mode 1 or mode 2). For example, whether or not the (some) proposed method/rule of the present disclosure is applied and/or related parameter(s) (e.g., threshold value(s)) may be configured (differently or independently) for each Tx profile (e.g., a Tx profile indicating that a service supports sidelink DRX operation or a Tx profile indicating that a service does not need to support sidelink DRX operation).

For example, whether or not the proposed rule of the present disclosure is applied and/or related parameter configuration value(s) may be configured (differently or independently) depending on whether the PUCCH configuration is supported (e.g., in case that a PUCCH resource is configured or in case that a PUCCH resource is not configured). For example, whether or not the proposed rule of the present disclosure is applied and/or related parameter configuration value(s) may be configured (differently or independently) for each resource pool (e.g., a resource pool with a PSFCH or a resource pool without a PSFCH). For example, whether or not the proposed rule of the present disclosure is applied and/or related parameter configuration value(s) may be configured (differently or independently) for each service/packet type. For example, whether or not the proposed rule of the present disclosure is applied and/or related parameter configuration value(s) may be configured (differently or independently) for each service/packet priority. For example, whether or not the proposed rule of the present disclosure is applied and/or related parameter configuration value(s) may be configured (differently or independently) for each QoS requirement (e.g., URLLC/EMBB traffic, reliability, latency). For example, whether or not the proposed rule of the present disclosure is applied and/or related parameter configuration value(s) may be configured (differently or independently) for each PQI. For example, whether or not the proposed rule of the present disclosure is applied and/or related parameter configuration value(s) may be configured (differently or independently) for each PFI. For example, whether or not the proposed rule of the present disclosure is applied and/or related parameter configuration value(s) may be configured (differently or independently) for each cast type (e.g., unicast, groupcast, broadcast). For example, whether or not the proposed rule of the present disclosure is applied and/or related parameter configuration value(s) may be configured (differently or independently) for each (resource pool) congestion level (e.g., CBR). For example, whether or not the proposed rule of the present disclosure is applied and/or related parameter configuration value(s) may be configured (differently or independently) for each SL HARQ feedback option (e.g., NACK-only feedback, ACK/NACK feedback). For example, whether or not the proposed rule of the present disclosure is applied and/or related parameter configuration value(s) may be configured specifically (or differently or independently) for HARQ Feedback Enabled MAC PDU transmission. For example, whether or not the proposed rule of the present disclosure is applied and/or related parameter configuration value(s) may be configured specifically (or differently or independently) for HARQ Feedback Disabled MAC PDU transmission. For example, whether or not the proposed rule of the present disclosure is applied and/or related parameter configuration value(s) may be configured specifically (or differently or independently) according to whether a PUCCH-based SL HARQ feedback reporting operation is configured or not. For example, whether or not the proposed rule of the present disclosure is applied and/or related parameter configuration value(s) may be configured specifically (or differently or independently) for pre-emption or depending on whether or not pre-emption-based resource reselection is performed. For example, whether or not the proposed rule of the present disclosure is applied and/or related parameter configuration value(s) may be configured specifically (or differently or independently) for re-evaluation or depending on whether or not re-evaluation-based resource reselection is performed. For example, whether or not the proposed rule of the present disclosure is applied and/or related parameter configuration value(s) may be configured (differently or independently) for each (L2 or L1) (source and/or destination) identifier. For example, whether or not the proposed rule of the present disclosure is applied and/or related parameter configuration value(s) may be configured (differently or independently) for each (L2 or L1) (a combination of source ID and destination ID) identifier. For example, whether or not the proposed rule of the present disclosure is applied and/or related parameter configuration value(s) may be configured (differently or independently) for each (L2 or L1) (a combination of a pair of source ID and destination ID and a cast type) identifier. For example, whether or not the proposed rule of the present disclosure is applied and/or related parameter configuration value(s) may be configured (differently or independently) for each direction of a pair of source layer ID and destination layer ID. For example, whether or not the proposed rule of the present disclosure is applied and/or related parameter configuration value(s) may be configured (differently or independently) for each PC5 RRC connection/link. For example, whether or not the proposed rule of the present disclosure is applied and/or related parameter configuration value(s) may be configured specifically (or differently or independently) depending on whether or not SL DRX is performed. For example, whether or not the proposed rule of the present disclosure is applied and/or related parameter configuration value(s) may be configured specifically (or differently or independently) depending on whether or not SL DRX is supported. For example, whether or not the proposed rule of the present disclosure is applied and/or related parameter configuration value(s) may be configured (differently or independently) for each SL mode type (e.g., resource allocation mode 1 or resource allocation mode 2). For example, whether or not the proposed rule of the present disclosure is applied and/or related parameter configuration value(s) may be configured specifically (or differently or independently) for the case of performing (a)periodic resource reservation. For example, whether or not the proposed rule of the present disclosure is applied and/or related parameter configuration value(s) may be configured specifically (or differently or independently) for each Tx profile (e.g., a Tx profile indicating that a service supports sidelink DRX operation or a Tx profile indicating that a service does not need to support sidelink DRX operation).

The proposal and whether or not the proposal rule of the present disclosure is applied (and/or related parameter configuration value(s)) may also be applied to a mmWave SL operation.

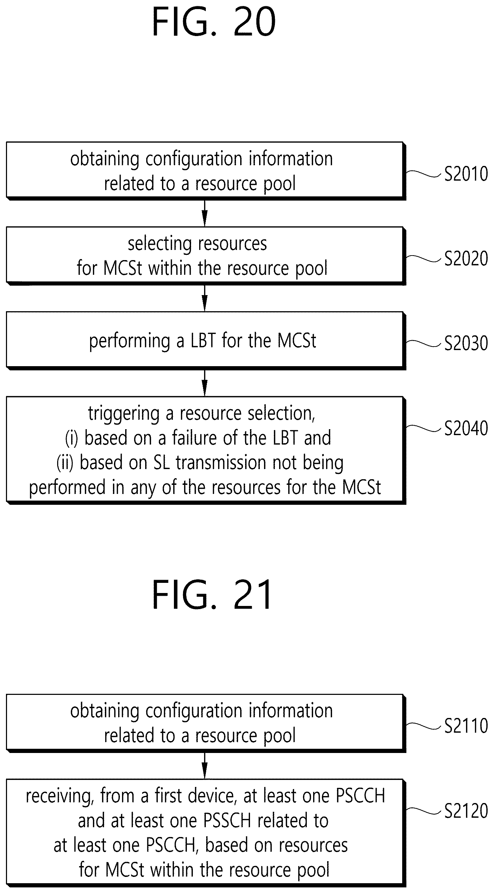

FIG. 20 is drawing illustrating a method for performing wireless communication by a first device, based on an embodiment of the present disclosure. The embodiment of FIG. 20 may be combined with various embodiments of the present disclosure.

Referring to FIG. 20, according to one embodiment of the present disclosure, in step S2010, for example, the first device may obtain configuration information related to a resource pool. In step S2020, for example, the first device may select resources for multi-consecutive slots transmission (MCSt) within the resource pool. In step S2030, for example, the first device may perform a listen-before-talk (LBT) for the MCSt. In step S2040, for example, the first device may trigger a resource selection, (i) based on a failure of the LBT and (ii) based on sidelink (SL) transmission not being performed in any of the resources for the MCSt.

Additionally or alternatively, the SL transmission may include at least one of first SL transmission for initial transmission and second SL transmission for retransmission.

Additionally or alternatively, the MCSt may include transmission related to at least one transport block (TB).

Additionally or alternatively, the SL transmission may include transmission related to any one of TB among the at least one TB.

Additionally or alternatively, (i) based on the failure of the LBT and (ii) based on the transmission related to the any one of TB not being performed in any of the resources for the MCSt, the resource selection may be triggered.

Additionally or alternatively, the MCSt may include at least one of initial transmission related to a first TB and retransmission related to the first TB.

Additionally or alternatively, (i) based on the failure of the LBT and (ii) based on the at least one of the initial transmission related to the first TB and the retransmission related to the first TB not being performed in any of the resources for the MCSt, the resource selection may be triggered.

Additionally or alternatively, the resource selection may include a resource selection related to any of the resources for the MCSt.

Additionally or alternatively, the MCSt may include transmission related to at least one TB.

Additionally or alternatively, (i) based on the failure of the LBT and (ii) based on SL transmission related to any one of TB among the at least one TB not being performed in any of the resources for the MCSt, the resource selection related to resources for the SL transmission related to the any one of TB may be triggered.

Additionally or alternatively, the MCSt may include transmission related to at least one TB.

Additionally or alternatively, (i) based on the failure of the LBT and (ii) based on SL transmission related to any one of TB among the at least one TB not being performed in any of the resources for the MCSt, the resource selection related to resources for the SL transmission related to all of TB among the at least one TB may be triggered.

Additionally or alternatively, (i) based on the failure of the LBT and (ii) based on SL transmission not being performed in any of the resources for the MCSt due to the failure of the LBT, the resource selection may be triggered.

Additionally or alternatively, the first device may perform the resource selection for a first resource, based on the resource selection being triggered.

Additionally or alternatively, a frequency domain of a second resource selected based on the resource selection may be included in a frequency domain of resource prior to the second resource.

Additionally or alternatively, the resource selection may include a resource selection related to resources subsequent to all of the resources for the MCSt.

Additionally or alternatively, the first device perform SL transmission on a resource subsequent to a first resource, (i) based on the LBT being performed and (ii) based on the LBT being successful within the first resource among any of the resources for the MCSt.

Additionally or alternatively, sensing prior to the SL transmission may not be performed.

Additionally or alternatively, based on the SL transmission including hybrid automatic repeat request (HARQ)-enabled SL transmission, the resources for the MCSt may be selected within the resource pool in which a physical sidelink feedback channel (PSFCH) is configured.

Additionally or alternatively, the LBT includes an LBT in which a first channel access priority class (CAPC) value may be used.

Additionally or alternatively, the first device may perform an LBT in which a second CAPC value greater than the first CAPC value is used, based on the LBT in which the first CAPC value is used being failed.

The proposed method may be applied to devices according to various embodiments of the present disclosure. First, the memory 104 of the first device 100 may store instructions, based on being executed by the at least one processor, cause the first device (e.g., the processor 102 and the transceiver 106) to perform operations. For example, the operations may include causing the first device (e.g., the processor 102 and the transceiver 106) to perform at least one of the following: obtaining configuration information related to a resource pool; selecting resources for multi-consecutive slots transmission (MCSt) within the resource pool; performing a listen-before-talk (LBT) for the MCSt; and triggering a resource selection, (i) based on a failure of the LBT and (ii) based on sidelink (SL) transmission not being performed in any of the resources for the MCSt.

In one embodiment, provided is a first device configured to perform wireless communication. The first device may include at least one transceiver; at least one processor; and at least one memory operably connected to the at least one processor and storing instructions, based on being executed by the at least one processor, cause the first device to perform operations. For example, the operations may include causing the first device (e.g., the processor 102 and the transceiver 106) to perform at least one of the following: obtaining configuration information related to a resource pool; selecting resources for multi-consecutive slots transmission (MCSt) within the resource pool; performing a listen-before-talk (LBT) for the MCSt; and triggering a resource selection, (i) based on a failure of the LBT and (ii) based on sidelink (SL) transmission not being performed in any of the resources for the MCSt.

In one embodiment, provided is a processing device configured to control a first device. The processing device may comprise: at least one processor; at least one memory operably connected to the at least one processor and storing instructions, based on being executed by the at least one processor, cause the first device to perform operations. For example, the operations may include causing the first device (e.g., the processor 102 and the transceiver 106) to perform at least one of the following: obtaining configuration information related to a resource pool; selecting resources for multi-consecutive slots transmission (MCSt) within the resource pool; performing a listen-before-talk (LBT) for the MCSt; and triggering a resource selection, (i) based on a failure of the LBT and (ii) based on sidelink (SL) transmission not being performed in any of the resources for the MCSt.

In one embodiment, provided is a non-transitory computer-readable storage medium recording instructions. For example, the instructions may cause a first device to perform operations. For example, the operations may include causing the first device (e.g., the processor 102 and the transceiver 106) to perform at least one of the following: obtaining configuration information related to a resource pool; selecting resources for multi-consecutive slots transmission (MCSt) within the resource pool; performing a listen-before-talk (LBT) for the MCSt; and triggering a resource selection, (i) based on a failure of the LBT and (ii) based on sidelink (SL) transmission not being performed in any of the resources for the MCSt.

FIG. 21 is a drawing illustrating a method for performing wireless communication by a second device, based on an embodiment of the present disclosure. The embodiment of FIG. 21 may be combined with various embodiments of the present disclosure.

Referring to FIG. 21, according to one embodiment in the present disclosure, in step S2110, for example, the second device may obtain configuration information related to a resource pool. In step S2120, for example, the second device may receive, from a first device, at least one physical sidelink control channel (PSCCH) and at least one physical sidelink shared channel (PSSCH) related to at least one PSCCH, based on resources for multi-consecutive slots transmission (MCSt) within the resource pool. For example, the resources for the MCSt may be selected within the resource pool. For example, a listen-before-talk (LBT) may be performed for the MCSt. For example, (i) based on a failure of the LBT and (ii) based on sidelink (SL) transmission not being performed in any of the resources for the MCSt, a resource selection may be triggered.

Additionally or alternatively, the SL transmission may include at least one of first SL transmission for initial transmission and second SL transmission for retransmission.

Additionally or alternatively, the MCSt may include transmission related to at least one transport block (TB).

Additionally or alternatively, the SL transmission may include transmission related to any one of TB among the at least one TB.

Additionally or alternatively, (i) based on the failure of the LBT and (ii) based on the transmission related to the any one of TB not being performed in any of the resources for the MCSt, the resource selection may be triggered.

Additionally or alternatively, the MCSt may include at least one of initial transmission related to a first TB and retransmission related to the first TB.

Additionally or alternatively, (i) based on the failure of the LBT and (ii) based on the at least one of the initial transmission related to the first TB and the retransmission related to the first TB not being performed in any of the resources for the MCSt, the resource selection may be triggered.

Additionally or alternatively, the resource selection may include a resource selection related to any of the resources for the MCSt.

Additionally or alternatively, the MCSt may include transmission related to at least one TB.

Additionally or alternatively, (i) based on the failure of the LBT and (ii) based on SL transmission related to any one of TB among the at least one TB not being performed in any of the resources for the MCSt, the resource selection related to resources for the SL transmission related to the any one of TB may be triggered.

Additionally or alternatively, the MCSt may include transmission related to at least one TB.

Additionally or alternatively, (i) based on the failure of the LBT and (ii) based on SL transmission related to any one of TB among the at least one TB not being performed in any of the resources for the MCSt, the resource selection related to resources for the SL transmission related to all of TB among the at least one TB may be triggered.

Additionally or alternatively, (i) based on the failure of the LBT and (ii) based on SL transmission not being performed in any of the resources for the MCSt due to the failure of the LBT, the resource selection may be triggered.

Additionally or alternatively, the first device may perform the resource selection for a first resource, based on the resource selection being triggered.

Additionally or alternatively, a frequency domain of a second resource selected based on the resource selection may be included in a frequency domain of resource prior to the second resource.

Additionally or alternatively, the resource selection may include a resource selection related to resources subsequent to all of the resources for the MCSt.

Additionally or alternatively, the first device perform SL transmission on a resource subsequent to a first resource, (i) based on the LBT being performed and (ii) based on the LBT being successful within the first resource among any of the resources for the MCSt.

Additionally or alternatively, sensing prior to the SL transmission may not be performed.

Additionally or alternatively, based on the SL transmission including hybrid automatic repeat request (HARQ)-enabled SL transmission, the resources for the MCSt may be selected within the resource pool in which a physical sidelink feedback channel (PSFCH) is configured.

Additionally or alternatively, the LBT includes an LBT in which a first channel access priority class (CAPC) value may be used.

Additionally or alternatively, the first device may perform an LBT in which a second CAPC value greater than the first CAPC value is used, based on the LBT in which the first CAPC value is used being failed.

The proposed method may be applied to devices according to various embodiments of the present disclosure. First, the memory 204 of the second device 200 may store instructions, based on being executed by the at least one processor, cause the second device (e.g., the processor 202 and the transceiver 206) to perform operations. For example, the operations may include causing the second device (e.g., the processor 202 and the transceiver 206) to perform at least one of the following: obtaining configuration information related to a resource pool; and receiving, from a first device, at least one physical sidelink control channel (PSCCH) and at least one physical sidelink shared channel (PSSCH) related to at least one PSCCH, based on resources for multi-consecutive slots transmission (MCSt) within the resource pool, wherein the resources for the MCSt may be selected within the resource pool, wherein a listen-before-talk (LBT) may be performed for the MCSt, and wherein, (i) based on a failure of the LBT and (ii) based on sidelink (SL) transmission not being performed in any of the resources for the MCSt, a resource selection may be triggered.

In one embodiment, provided is a second device configured to perform wireless communication. The second device may include at least one transceiver; at least one processor; and at least one memory operably connected to the at least one processor and storing instructions, based on being executed by the at least one processor, cause the second device to perform operations. For example, the operations may include causing the second device (e.g., the processor 202 and the transceiver 206) to perform at least one of the following: obtaining configuration information related to a resource pool; and receiving, from a first device, at least one physical sidelink control channel (PSCCH) and at least one physical sidelink shared channel (PSSCH) related to at least one PSCCH, based on resources for multi-consecutive slots transmission (MCSt) within the resource pool, wherein the resources for the MCSt may be selected within the resource pool, wherein a listen-before-talk (LBT) may be performed for the MCSt, and wherein, (i) based on a failure of the LBT and (ii) based on sidelink (SL) transmission not being performed in any of the resources for the MCSt, a resource selection may be triggered.

In one embodiment, provided is a processing device configured to control a second device. The processing device may comprise: at least one processor; at least one memory operably connected to the at least one processor and storing instructions, based on being executed by the at least one processor, cause the second device to perform operations. For example, the operations may include causing the second device (e.g., the processor 202 and the transceiver 206) to perform at least one of the following: obtaining configuration information related to a resource pool; and receiving, from a first device, at least one physical sidelink control channel (PSCCH) and at least one physical sidelink shared channel (PSSCH) related to at least one PSCCH, based on resources for multi-consecutive slots transmission (MCSt) within the resource pool, wherein the resources for the MCSt may be selected within the resource pool, wherein a listen-before-talk (LBT) may be performed for the MCSt, and wherein, (i) based on a failure of the LBT and (ii) based on sidelink (SL) transmission not being performed in any of the resources for the MCSt, a resource selection may be triggered.

In one embodiment, provided is a non-transitory computer-readable storage medium recording instructions. For example, the instructions may cause a second device to perform operations. For example, the operations may include causing the second device (e.g., the processor 202 and the transceiver 206) to perform at least one of the following: obtaining configuration information related to a resource pool; and receiving, from a first device, at least one physical sidelink control channel (PSCCH) and at least one physical sidelink shared channel (PSSCH) related to at least one PSCCH, based on resources for multi-consecutive slots transmission (MCSt) within the resource pool, wherein the resources for the MCSt may be selected within the resource pool, wherein a listen-before-talk (LBT) may be performed for the MCSt, and wherein, (i) based on a failure of the LBT and (ii) based on sidelink (SL) transmission not being performed in any of the resources for the MCSt, a resource selection may be triggered. The various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

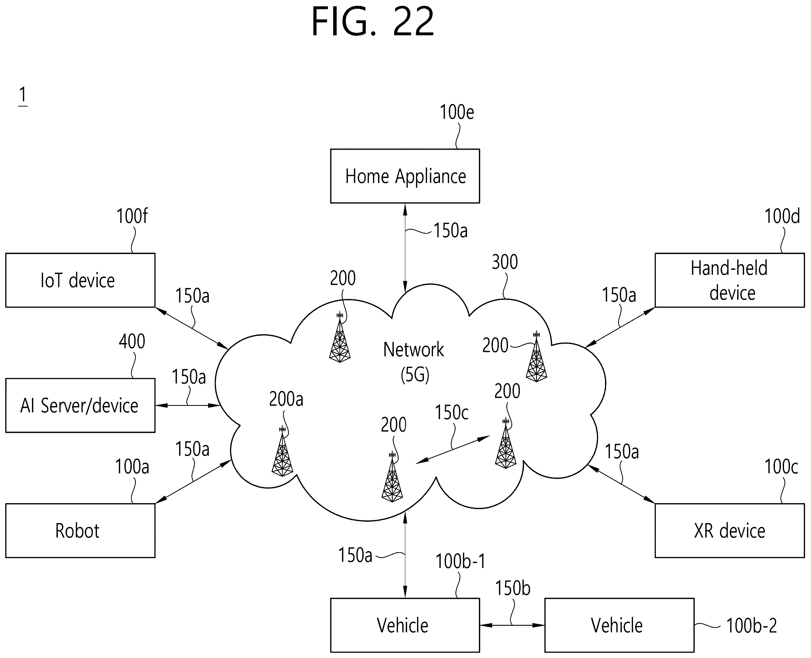

FIG. 22 shows a communication system 1, based on an embodiment of the present disclosure. The embodiment of FIG. 22 may be combined with various embodiments of the present disclosure.

Referring to FIG. 22, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

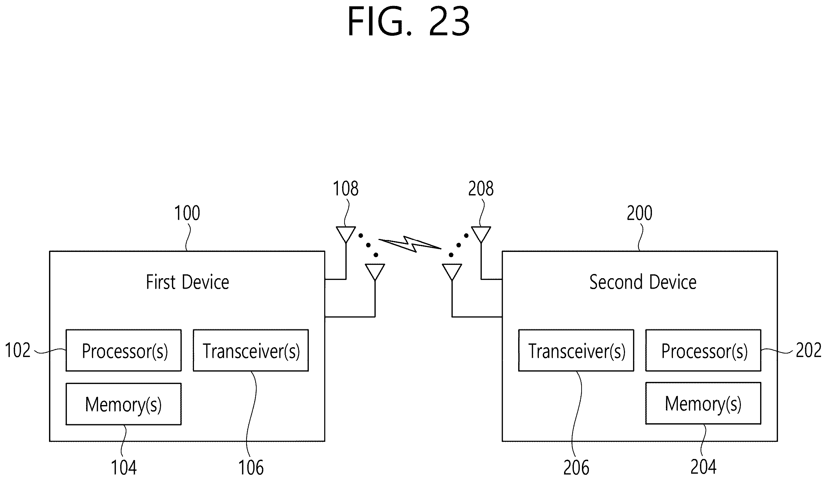

FIG. 23 shows wireless devices, based on an embodiment of the present disclosure. The embodiment of FIG. 23 may be combined with various embodiments of the present disclosure.

Referring to FIG. 23, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 22.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

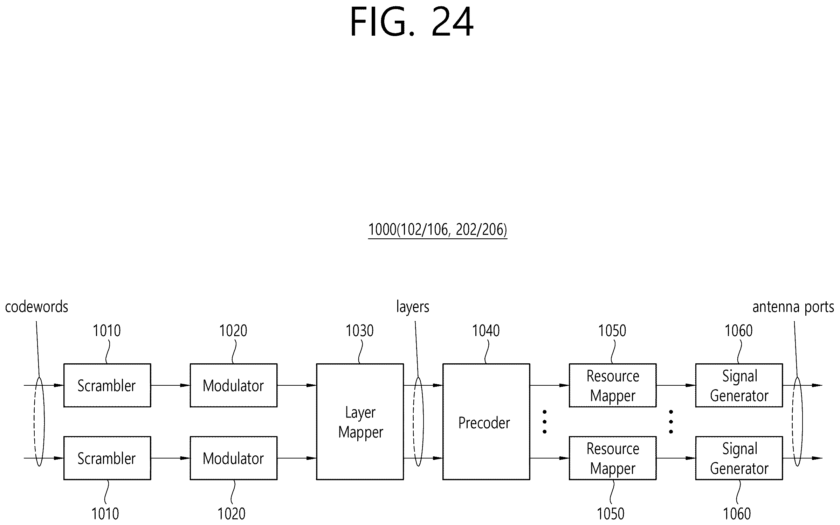

FIG. 24 shows a signal process circuit for a transmission signal, based on an embodiment of the present disclosure. The embodiment of FIG. 24 may be combined with various embodiments of the present disclosure.

Referring to FIG. 24, a signal processing circuit 1000 may include scramblers 1010, modulators 1020, a layer mapper 1030, a precoder 1040, resource mappers 1050, and signal generators 1060. An operation/function of FIG. 24 may be performed, without being limited to, the processors 102 and 202 and/or the transceivers 106 and 206 of FIG. 23. Hardware elements of FIG. 24 may be implemented by the processors 102 and 202 and/or the transceivers 106 and 206 of FIG. 23. For example, blocks 1010 to 1060 may be implemented by the processors 102 and 202 of FIG. 23. Alternatively, the blocks 1010 to 1050 may be implemented by the processors 102 and 202 of FIG. 23 and the block 1060 may be implemented by the transceivers 106 and 206 of FIG. 23.

Codewords may be converted into radio signals via the signal processing circuit 1000 of FIG. 24. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 24. For example, the wireless devices (e.g., 100 and 200 of FIG. 23) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

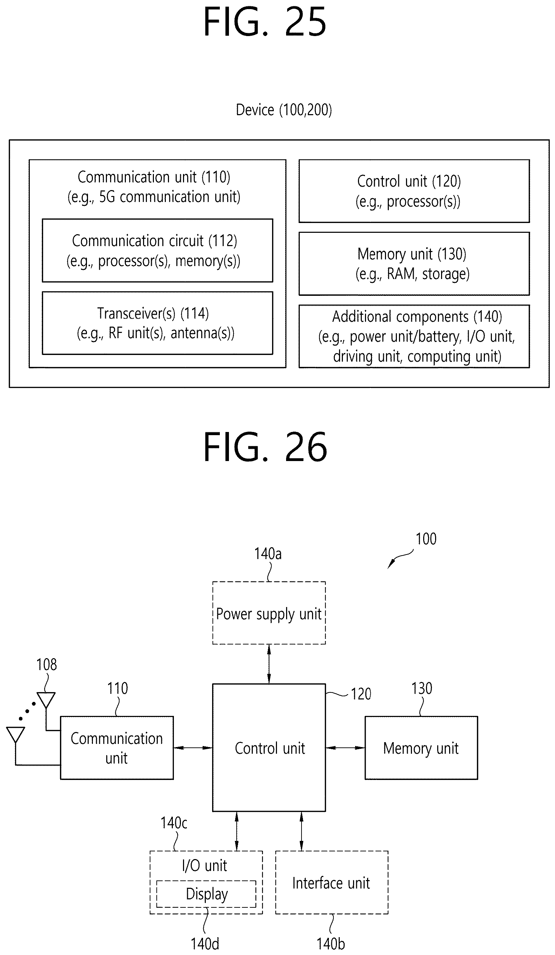

FIG. 25 shows another example of a wireless device, based on an embodiment of the present disclosure. The wireless device may be implemented in various forms according to a use-case/service (refer to FIG. 22). The embodiment of FIG. 25 may be combined with various embodiments of the present disclosure.

Referring to FIG. 25, wireless devices 100 and 200 may correspond to the wireless devices 100 and 200 of FIG. 23 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 23. For example, the transceiver(s) 114 may include the one or more transceivers 106 and 206 and/or the one or more antennas 108 and 208 of FIG. 23. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 22), the vehicles (100b-1 and 100b-2 of FIG. 22), the XR device (100c of FIG. 22), the hand-held device (100d of FIG. 22), the home appliance (100e of FIG. 22), the IoT device (100f of FIG. 22), a digital broadcast terminal, a hologram device, a public safety device, an MTC device, a medicine device, a fintech device (or a finance device), a security device, a climate/environment device, the AI server/device (400 of FIG. 22), the BSs (200 of FIG. 22), a network node, etc. The wireless device may be used in a mobile or fixed place according to a use-example/service.

In FIG. 25, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 25 will be described in detail with reference to the drawings.

FIG. 26 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 26 may be combined with various embodiments of the present disclosure.

Referring to FIG. 26, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 25, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

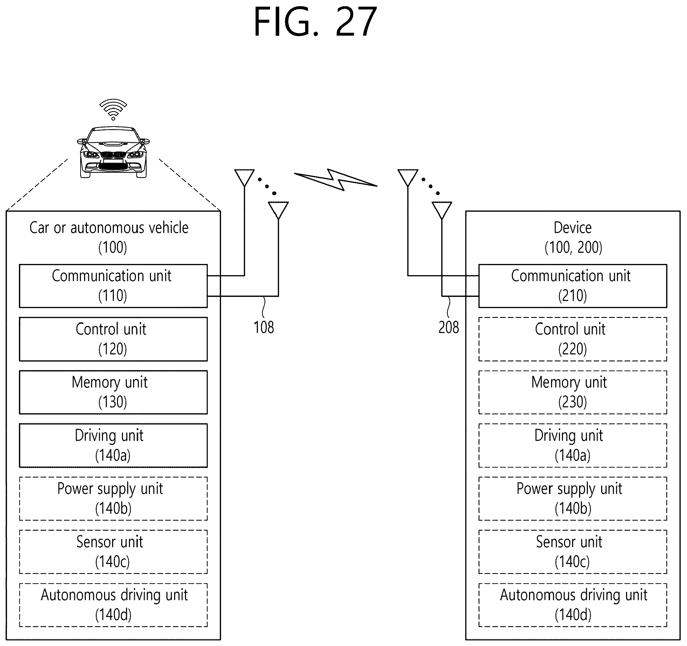

FIG. 27 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 27 may be combined with various embodiments of the present disclosure.

Referring to FIG. 27, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
obtaining configuration information related to a resource pool;
selecting resources for multi-consecutive slots transmission (MCSt) within the resource pool;
performing a listen-before-talk (LBT) for the MCSt; and
triggering a resource selection, (i) based on a failure of the LBT and (ii) based on sidelink (SL) transmission not being performed in any of the resources for the MCSt.

2. The method of claim 1, wherein the SL transmission includes at least one of first SL transmission for initial transmission and second SL transmission for retransmission.

3. The method of claim 1, wherein the MCSt includes transmission related to at least one transport block (TB),
wherein the SL transmission includes transmission related to any one of TB among the at least one TB, and
wherein, (i) based on the failure of the LBT and (ii) based on the transmission related to the any one of TB not being performed in any of the resources for the MCSt, the resource selection is triggered.

4. The method of claim 1, wherein the MCSt includes at least one of initial transmission related to a first TB and retransmission related to the first TB, and
wherein, (i) based on the failure of the LBT and (ii) based on the at least one of the initial transmission related to the first TB and the retransmission related to the first TB not being performed in any of the resources for the MCSt, the resource selection is triggered.

5. The method of claim 1, wherein the resource selection includes a resource selection related to any of the resources for the MCSt.

6. The method of claim 1, wherein the MCSt includes transmission related to at least one TB, and
wherein, (i) based on the failure of the LBT and (ii) based on SL transmission related to any one of TB among the at least one TB not being performed in any of the resources for the MCSt, the resource selection related to resources for the SL transmission related to the any one of TB is triggered.

7. The method of claim 1, wherein the MCSt includes transmission related to at least one TB, and
wherein, (i) based on the failure of the LBT and (ii) based on SL transmission related to any one of TB among the at least one TB not being performed in any of the resources for the MCSt, the resource selection related to resources for the SL transmission related to all of TB among the at least one TB is triggered.

8. The method of claim 1, wherein, (i) based on the failure of the LBT and (ii) based on SL transmission not being performed in any of the resources for the MCSt due to the failure of the LBT, the resource selection is triggered.

9. The method of claim 1, further comprising:
performing the resource selection for a first resource, based on the resource selection being triggered,
wherein a frequency domain of a second resource selected based on the resource selection is included in a frequency domain of resource prior to the second resource.

10. The method of claim 1, wherein the resource selection includes a resource selection related to resources subsequent to all of the resources for the MCSt.

11. The method of claim 1, further comprising:
performing SL transmission on a resource subsequent to a first resource, (i) based on the LBT being performed and (ii) based on the LBT being successful within the first resource among any of the resources for the MCSt,
wherein sensing prior to the SL transmission is not performed.

12. The method of claim 1, wherein, based on the SL transmission including hybrid automatic repeat request (HARQ)-enabled SL transmission, the resources for the MCSt are selected within the resource pool in which a physical sidelink feedback channel (PSFCH) is configured.

13. The method of claim 1, wherein the LBT includes an LBT in which a first channel access priority class (CAPC) value is used, and
further comprising:
performing an LBT in which a second CAPC value greater than the first CAPC value is used, based on the LBT in which the first CAPC value is used being failed.

14. A first device adapted to perform wireless communication, the first device comprising:
at least one transceiver;
at least one processor; and
at least one memory connected to the at least one processor and storing instructions that, based on being executed, cause the first device to perform operations comprising:
obtaining configuration information related to a resource pool;
selecting resources for multi-consecutive slots transmission (MCSt) within the resource pool;
performing a listen-before-talk (LBT) for the MCSt; and
triggering a resource selection, (i) based on a failure of the LBT and (ii) based on sidelink (SL) transmission not being performed in any of the resources for the MCSt.

15. A processing device adapted to control a first device to perform wireless communication, the processing device comprising:
at least one processor; and
at least one memory connected to the at least one processor and storing instructions that, based on being executed, cause the at least one processor to perform operations comprising:
obtaining configuration information related to a resource pool;
selecting resources for multi-consecutive slots transmission (MCSt) within the resource pool;
performing a listen-before-talk (LBT) for the MCSt; and
triggering a resource selection, (i) based on a failure of the LBT and (ii) based on sidelink (SL) transmission not being performed in any of the resources for the MCSt.

16. A non-transitory computer-readable storage medium recording instructions, the instruction, when executed, cause a first device to perform operations comprising:
obtaining configuration information related to a resource pool;
selecting resources for multi-consecutive slots transmission (MCSt) within the resource pool;
performing a listen-before-talk (LBT) for the MCSt; and
triggering a resource selection, (i) based on a failure of the LBT and (ii) based on sidelink (SL) transmission not being performed in any of the resources for the MCSt.

17. A method for performing wireless communication by a second device, the method comprising:
obtaining configuration information related to a resource pool; and
receiving, from a first device, at least one physical sidelink control channel (PSCCH) and at least one physical sidelink shared channel (PSSCH) related to at least one PSCCH, based on resources for multi-consecutive slots transmission (MCSt) within the resource pool,
wherein the resources for the MCSt are selected within the resource pool,
wherein a listen-before-talk (LBT) is performed for the MCSt, and
wherein, (i) based on a failure of the LBT and (ii) based on sidelink (SL) transmission not being performed in any of the resources for the MCSt, a resource selection is triggered.

18. A second device adapted to perform wireless communication, the second device comprising:
at least one transceiver;
at least one processor; and
at least one memory connected to the at least one processor and storing instructions that, based on being executed, cause the second device to perform operations comprising:
obtaining configuration information related to a resource pool; and
receiving, from a first device, at least one physical sidelink control channel (PSCCH) and at least one physical sidelink shared channel (PSSCH) related to at least one PSCCH, based on resources for multi-consecutive slots transmission (MCSt) within the resource pool,
wherein the resources for the MCSt are selected within the resource pool,
wherein a listen-before-talk (LBT) is performed for the MCSt, and
wherein, (i) based on a failure of the LBT and (ii) based on sidelink (SL) transmission not being performed in any of the resources for the MCSt, a resource selection is triggered.

19. A processing device adapted to control a second device to perform wireless communication, the processing device comprising:
at least one processor; and
at least one memory connected to the at least one processor and storing instructions that, based on being executed, cause the at least one processor to perform operations comprising:
obtaining configuration information related to a resource pool; and
receiving, from a first device, at least one physical sidelink control channel (PSCCH) and at least one physical sidelink shared channel (PSSCH) related to at least one PSCCH, based on resources for multi-consecutive slots transmission (MCSt) within the resource pool,
wherein the resources for the MCSt are selected within the resource pool,
wherein a listen-before-talk (LBT) is performed for the MCSt, and
wherein, (i) based on a failure of the LBT and (ii) based on sidelink (SL) transmission not being performed in any of the resources for the MCSt, a resource selection is triggered.

20. A non-transitory computer-readable storage medium recording instructions, the instruction, when executed, cause a second device to perform operations comprising:
obtaining configuration information related to a resource pool; and
receiving, from a first device, at least one physical sidelink control channel (PSCCH) and at least one physical sidelink shared channel (PSSCH) related to at least one PSCCH, based on resources for multi-consecutive slots transmission (MCSt) within the resource pool,
wherein the resources for the MCSt are selected within the resource pool,
wherein a listen-before-talk (LBT) is performed for the MCSt, and
wherein, (i) based on a failure of the LBT and (ii) based on sidelink (SL) transmission not being performed in any of the resources for the MCSt, a resource selection is triggered.
